# FASCICULE DE BREVET EUROPEEN

(11) **EP 4 384 654 B1**
(45) Date de publication et mention de la délivrance du brevet: **04.06.2025**
(21) Numéro de dépôt: 22761236.3
(22) Date de dépôt: 08.08.2022
(51) Int. Cl.: C25B 1/042, C25B 15/021, C25B 9/00, C25B 15/08

(54) **SYSTÈME D'ÉLECTROLYSEUR HAUTE TEMPÉRATURE OPTIMISÉ PAR UN MODULE DE RÉCUPÉRATION À CIRCUIT INTERMÉDIAIRE**
DURCH EIN RÜCKGEWINNUNGSMODUL MIT EINEM ZWISCHENKREISLAUF OPTIMIERTES HOCHTEMPERATURELEKTROLYSESYSTEM
HIGH-TEMPERATURE ELECTROLYSER SYSTEM OPTIMISED BY A RECOVERY MODULE WITH AN INTERMEDIATE CIRCUIT

(30) Priorité: 10.08.2021 FR 2108605
(43) Date de publication de la demande: 19.06.2024
(73) Titulaire: Commissariat à l'Energie Atomique et aux Energies Alternatives, 75015 Paris (FR)
(72) Inventeur: DUMOULIN, Pierre, 38054 GRENOBLE Cedex 09 (FR); TAUVERON, Nicolas, 38054 GRENOBLE Cedex 09 (FR)
(74) Mandataire: Hautier IP
(86) Numéro de dépôt international: PCT/EP2022/072269
(87) Numéro de publication internationale: WO 2023/016998

(56) Documents cités:
- WO-A1-2019/058579
- WO-A1-2020/180082
- CN-A- 113 503 192
- FR-A1- 3 115 796
- JP-A- H0 693 482
- JP-B2- 6 346 013
- JP-B2- 6 415 941
- KR-A- 20110 072 184
- US-A- 5 312 699
- US-A1- 2018 287 179

## Description

### DOMAINE TECHNIQUE DE L'INVENTION

La présente invention concerne le domaine des piles à combustible à oxydes solides (SOFC, acronyme anglais pour « Solid Oxide Fuel Cell ») et celui de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis), également à oxyde solide (SOEC, acronyme anglais pour « Solid Oxide Electrolyte Cell »). Elle trouve pour application particulièrement pour optimiser la consommation énergétique d'un système électrolyseur SOEC.

### ETAT DE LA TECHNIQUE

L'électrolyse de l'eau est une réaction électrolytique qui décompose l'eau en dioxygène et dihydrogène gazeux avec l'aide d'un courant électrique selon la réaction : H2O → H2 + 1/2 O2.

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur. Une cellule d'électrolyse à oxydes solides ou « SOEC » (acronyme anglo-saxon « Solid Oxide Electrolyte Cell ») comprend notamment : - une première électrode conductrice poreuse, ou « cathode », destinée à être alimentée en vapeur d'eau pour la production de dihydrogène, - une seconde électrode conductrice poreuse, ou « anode », par laquelle s'échappe le dioxygène produit par l'électrolyse de l'eau injectée sur la cathode, et - une membrane à oxyde solide (électrolyte dense) prise en sandwich entre la cathode et l'anode, la membrane étant conductrice anionique pour de hautes températures, usuellement des températures supérieures à 600°C. En chauffant la cellule au moins à cette température et en injectant un courant électrique l entre la cathode et l'anode, il se produit alors une réduction de l'eau sur la cathode, ce qui génère du dihydrogène (H2) au niveau de la cathode et du dioxygène au niveau de l'anode. Pour mettre en œuvre l'électrolyse à haute température, il est connu d'utiliser un électrolyseur de type SOEC constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules.

Pour réaliser l'électrolyse de la vapeur d'eau à haute température EHT, on injecte de la vapeur d'eau H2O dans le compartiment cathodique.

Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le dihydrogène est collecté et évacué en sortie de compartiment à hydrogène. Les ions oxygène migrent à travers l'électrolyte et se recombinent en dioxygène O2 à l'interface entre l'électrolyte et l'électrode à oxygène (anode).

Pour la mise en œuvre effective de l'électrolyse par l'empilement, l'empilement est porté à une température supérieure à 600°C, usuellement une température comprise entre 600°C et 950°C, l'alimentation en gaz est mise en marche à débit constant et une source d'alimentation électrique est branchée entre deux bornes de l'empilement afin d'y faire circuler le courant I.

Le rendement de la transformation de l'électricité en hydrogène est un point clé afin d'assurer la compétitivité de la technologie. La consommation électrique a principalement lieu lors de la réaction d'électrolyse à proprement parler, mais près de 30 % de la consommation de l'électrolyseur provient du système de gestion thermique/hydraulique des fluides. C'est-à-dire l'architecture externe à l'électrolyseur et la gestion des fluides et de l'énergie thermique dans cette architecture.

L'évaporation de l'eau utilisée dans l'électrolyseur est la consommation d'énergie la plus importante de ce système de gestion thermique/hydraulique. Classiquement, cette fonction est assurée par un générateur de vapeur électrique qui consomme 20 % de la consommation globale de l'électrolyseur.

Par ailleurs, en général une partie importante d'énergie est rejetée dans l'environnement ambiant. Par exemple, durant la phase d'assèchement de l'hydrogène et de sa compression il est nécessaire de fortement refroidir ce mélange afin de permettre la condensation de l'eau présente dans le mélange eau/hydrogène. Cette condensation s'effectue très majoritairement à une température inférieure à la température d'évaporation de l'eau en entrée de l'électrolyseur, ce qui fait qu'une très faible part de cette énergie de condensation est utilisable.

Il existe donc un besoin de minimiser cette consommation en optimisant l'architecture et la gestion des fluides du système de l'électrolyseur. La demande de brevet US 2018/287179 A1 décrit un système comprenant un électrolyseur à haute température un système de récupération de l'énergie thermique.

Un objet de la présente invention est donc de proposer un système d'électrolyseur haute température optimisé par un module de récupération à circuit intermédiaire.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

Pour atteindre cet objectif, selon un mode de réalisation on prévoit un système selon la revendication 1. Le système comprend
- un électrolyseur à haute température (EHT),
- une première ligne d'alimentation de l'électrolyseur configurée pour alimenter l'électrolyseur en vapeur d'eau,
- une première ligne d'évacuation de l'électrolyseur configurée pour évacuer depuis l'électrolyseur du dihydrogène,
- une deuxième ligne d'évacuation de l'électrolyseur configurée pour évacuer depuis l'électrolyseur du dioxygène,
- un premier module d'échange thermique configuré pour assurer un échange thermique entre la première ligne d'alimentation en vapeur d'eau et la première ligne d'évacuation du dihydrogène.

Le système étant caractérisé en ce qu'il comprend un premier module de récupération de l'énergie thermique du dihydrogène en sortie du premier module d'échange thermique au profit de la première ligne d'alimentation en vapeur d'eau, le module de récupération comprenant
- un premier échangeur intermédiaire agencé sur la première ligne d'évacuation en aval du premier module d'échange thermique et configuré pour transférer l'énergie thermique du dihydrogène à un fluide intermédiaire, et
- un premier générateur de vapeur intermédiaire agencé sur la première ligne d'alimentation en vapeur configuré pour transférer l'énergie thermique du fluide intermédiaire à l'eau liquide,
- un premier circuit fluidique intermédiaire configuré pour recevoir un fluide intermédiaire et assurer la connexion fluidique entre le premier échangeur intermédiaire et le premier générateur de vapeur intermédiaire.

Le système comprend également un troisième module de récupération de l'énergie thermique du dihydrogène en sortie du premier module d'échange thermique 5 au profit de la première ligne d'alimentation 2 en vapeur d'eau, le troisième module de récupération comprenant une pompe à chaleur et un circuit intermédiaire, le circuit intermédiaire comprenant :
o un deuxième échangeur intermédiaire 7 agencé sur la première ligne d'évacuation 2 en aval du premier module d'échange thermique 5 et configuré pour transférer l'énergie thermique du dihydrogène à un fluide intermédiaire, et
o un troisième circuit fluidique intermédiaire 32 configuré pour recevoir un fluide intermédiaire et assurer la connexion fluidique entre le deuxième échangeur intermédiaire 7 et la pompe à chaleur, la pompe à chaleur comprenant :
   o un circuit fluidique 27 configuré pour recevoir un fluide caloporteur,
   o un évaporateur 25 agencé sur le circuit fluidique intermédiaire 32 en aval de du deuxième échangeur intermédiaire 7 et configuré pour transférer l'énergie thermique du fluide intermédiaire au fluide caloporteur,
   o un compresseur 26 configuré pour comprimer le fluide caloporteur,
   o un condenseur 23 agencé sur la première ligne d'alimentation 2 en vapeur d'eau en amont du premier module d'échange thermique 5 et configuré pour transférer l'énergie thermique du fluide caloporteur à l'eau liquide,
   o un détendeur 24 configuré pour détendre le fluide caloporteur, le circuit fluidique 27 étant configuré pour connecter fluidiquement l'évaporateur 25 au compresseur 26, le compresseur 26 au condenseur 23, le condenseur 23 au détendeur 24 et le détendeur 24 à l'évaporateur 25.

Le système comprend aussi un cinquième échangeur intermédiaire 12 agencé sur la première ligne d'évacuation 4 du dihydrogène en aval du deuxième échangeur intermédiaire 7 et en parallèle du deuxième échangeur intermédiaire 7 sur le troisième circuit fluidique intermédiaire 32 configuré pour transférer l'énergie thermique du dihydrogène au fluide intermédiaire.

Cette disposition permet de récupérer les calories du dihydrogène produit par l'électrolyseur au profit de la production de vapeur d'eau. Par le présent système, le module de récupération permet à la fois le refroidissement du dihydrogène et une production de vapeur. Ainsi, la consommation électrique du système est fortement réduite.

Ainsi, le système utilise la chaleur du dihydrogène en sortie de l'électrolyseur, mais préférentiellement après le premier module d'échange thermique de sorte que le rejet thermique du dihydrogène soit exploité à plus basse température par un générateur de vapeur via un circuit intermédiaire. Les calories récupérées du dihydrogène sont réinjectées à une température supérieure à la température d'évaporation de l'eau sur la ligne d'alimentation en vapeur d'eau et préférentiellement en amont d'un générateur de vapeur électrique.

Avantageusement, l'utilisation d'un circuit intermédiaire entre la première ligne d'évacuation de dihydrogène et le générateur de vapeur intermédiaire permet d'avoir un générateur de vapeur déporté et non pas un échangeur entre la ligne d'évacuation du dihydrogène dans laquelle circule de l'eau et du dihydrogène. Le circuit intermédiaire présente une grande modularité du module de récupération, car il permet également d'envisager de récupérer les calories à d'autres endroits du système tel que par exemple en aval sur la ligne d'évacuation du dihydrogène ou bien encore sur la ligne d'évacuation du dioxygène, et cela sans compliquer la structure du module de récupération.

Le système permet ainsi de réduire la consommation électrique du système en augmentant la puissance thermique prélevée.

Le système selon l'invention présente un rendement global amélioré de 3% par rapport à une configuration classique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 est un schéma fonctionnel représentant le système selon un premier mode de réalisation de l'invention.
La figure 2 représente un schéma fonctionnel représentant un circuit intermédiaire.
La figure 3 est un schéma fonctionnel représentant le système selon un deuxième mode de réalisation de l'invention

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :

Selon un exemple, le système comprend un sixième échangeur intermédiaire 15 agencé sur la première ligne d'évacuation 4 du dihydrogène en aval du cinquième échangeur intermédiaire 12 et en parallèle du deuxième échangeur intermédiaire 7 et du cinquième échangeur thermique 12 sur le circuit fluidique intermédiaire 32 configuré pour transférer l'énergie thermique du dihydrogène au fluide intermédiaire.

Selon un exemple, le système comprend un générateur électrique de vapeur 28 agencé sur la première ligne d'alimentation en eau 2 en amont du premier module d'échange thermique 5.

Selon un exemple, le générateur électrique de vapeur 28 est agencé en aval du premier générateur de vapeur 50 et préférentiellement en aval du condenseur 23.

Selon un exemple, le système comprend un deuxième module de récupération en dépression de l'énergie thermique du dihydrogène en sortie du premier module d'échange thermique 5 au profit de la première ligne d'alimentation 2 en vapeur d'eau, le module de récupération en dépression comprenant
- un troisième échangeur intermédiaire 8 agencé sur la première ligne d'évacuation 4 en aval du premier module d'échange thermique 5 et configuré pour transférer l'énergie thermique du dihydrogène à un fluide intermédiaire,
- un détendeur 40 et un compresseur 41 agencés en amont du premier module d'échange thermique 5 sur la première ligne d'alimentation 2 en vapeur et définissant entre eux un tronçon en dépression de la première ligne d'alimentation 2 en vapeur
- un deuxième générateur de vapeur intermédiaire 60 agencé sur la portion en dépression de la première ligne d'alimentation 2 en vapeur configuré pour transférer l'énergie thermique du fluide intermédiaire à l'eau liquide,
- un deuxième circuit fluidique intermédiaire configuré pour recevoir un fluide intermédiaire et assurer la connexion fluidique entre le troisième échangeur intermédiaire (8) et le deuxième générateur de vapeur 60.

Selon un exemple, le générateur de vapeur électrique 28 est agencé sur la portion en dépression en aval du deuxième générateur de vapeur 60 et préférentiellement en aval du condenseur 23.

Selon un exemple, la première ligne d'alimentation 2 en vapeur comprend une branche principale sur laquelle est agencé le générateur de vapeur 50 et une branche en dépression comprenant le tronçon en dépression, la branche principale et le branche en dépression étant agencée en parallèle.

Selon un exemple, le système comprend une deuxième ligne d'alimentation 10 de l'électrolyseur configuré pour alimenter l'électrolyseur 1 en air.

Selon un exemple, le système comprend un deuxième module d'échange thermique 11 configuré pour assurer un échange thermique entre la deuxième ligne d'alimentation 10 en air et la deuxième ligne d'évacuation 3 du dioxygène.

Selon un exemple, le système comprend un quatrième échangeur thermique intermédiaire 9 agencé entre la deuxième ligne d'évacuation du dioxygène 10 et sur le premier circuit fluidique intermédiaire, en parallèle au premier échangeur intermédiaire 6.

Selon un exemple, le système comprend un septième échangeur intermédiaire 29 agencé sur la deuxième ligne d'évacuation du dioxygène 10 en aval du premier échangeur thermique 9 et en parallèle du deuxième échangeur intermédiaire 7 sur le troisième circuit fluidique intermédiaire 32 configuré pour transférer l'énergie thermique du dioxygène au fluide intermédiaire.

Selon une possibilité, le système comprend au moins un premier aéroréfrigérant ou un deuxième échangeur thermique agencé sur la première ligne d'évacuation de dihydrogène, en aval du premier échangeur intermédiaire.

Selon une possibilité, le système comprend au moins un deuxième aéroréfrigérant ou un troisième échangeur thermique agencé sur la première ligne d'évacuation de dihydrogène, en aval du deuxième échangeur thermique.

Selon un exemple, le système comprend en aval du premier aéroréfrigérant et en amont du deuxième échangeur intermédiaire un séparateur liquide/gaz.

L'amont et l'aval, l'entrée, la sortie, en un point donné sont pris en référence au sens de circulation du fluide.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

La numérotation premier, deuxième, troisième, etc. n doit s'entendre sans limitation et sans lien avec la nécessité d'avoir n-1 ou un n+1.

Le système selon l'invention comprend un électrolyseur 1 à haute température (EHT). Préférentiellement, l'électrolyseur 1 est de type SOEC de l'acronyme anglais pour « Solid Oxide Electrolyte Cell », c'est-à-dire à oxyde solide.

Le système comprend plusieurs lignes d'alimentation et d'évacuation connectées à l'électrolyseur 1. Ainsi, on entend par ligne une canalisation, un tube ou un ensemble de canalisations ou tubes qui permettent le transport de fluide vers et depuis l'électrolyseur 1.

Le système selon l'invention comprend une première ligne d'alimentation 2 de l'électrolyseur 1 apte à alimenter l'électrolyseur 1 en vapeur d'eau. Selon une possibilité, la première ligne d'alimentation 2 est configurée pour apporter à l'électrolyseur 1 de la vapeur d'eau, on entend par là que la première ligne d'alimentation 2 peut apporter un mélange de vapeur d'eau et d'autre(s) gaz par exemple de l'air ou du dihydrogène ou de dioxyde de carbone. En amont dans cette première ligne d'alimentation 2, la vapeur d'eau n'est pas encore formée et la première ligne d'alimentation 2 est configurée pour recevoir de l'eau liquide. Selon une possibilité préférée, la première ligne d'alimentation 2 comprend une première portion recevant de l'eau liquide et une deuxième portion, en aval de la première portion, recevant de la vapeur d'eau. Préférentiellement, la première portion est située en amont d'un générateur de vapeur 28 et la deuxième portion est située en aval dudit générateur de vapeur 28.

Le système selon l'invention comprend une première ligne d'évacuation 4 apte à évacuer depuis l'électrolyseur 1 du dihydrogène (H₂). Préférentiellement, la première ligne d'évacuation 4 reçoit le dihydrogène. Le dihydrogène est avantageusement produit par l'électrolyseur 1. Le dihydrogène est sous forme gazeuse. La première ligne d'évacuation 4 peut évacuer un mélange de dihydrogène et de vapeur d'eau, dite résiduelle, n'ayant pas était décomposé par l'électrolyseur 1.

Le système selon l'invention comprend une deuxième ligne d'évacuation 3 apte à évacuer depuis l'électrolyseur 1 du dioxygène (O₂). Préférentiellement, la deuxième ligne d'évacuation 3 reçoit le dioxygène. Le dioxygène est avantageusement produit par l'électrolyseur 1. Le dioxygène est sous forme gazeuse. La deuxième ligne d'évacuation 3 évacue selon une possibilité un gaz enrichi en dioxygène, par exemple de l'air enrichi en dioxygène.

Dans la suite de la description, la première ligne d'alimentation 2 est dénommée première ligne d'alimentation 2 en vapeur d'eau, la première ligne d'évacuation 4 est dénommée première ligne d'évacuation 4 en dihydrogène et la deuxième ligne d'évacuation 3 est dénommée deuxième ligne d'évacuation 3 en dioxygène sans être limitative sur le gaz, le fluide ou le mélange pouvant être transporté dans ces lignes.

Selon une possibilité, le système comprend un premier module d'échange thermique 5 configuré pour assurer un échange thermique entre la première ligne d'alimentation 2 en vapeur d'eau et la première ligne d'évacuation 4 du dihydrogène. Ce module d'échange thermique est configuré pour transférer les calories du dihydrogène issu de l'électrolyseur 1 à l'eau destinée à alimenter l'électrolyseur 1. Un flux de gaz de dihydrogène assure l'augmentation de température du flux d'eau ce tout en permettant également de refroidir le flux de dihydrogène évacué et qui est avantageusement asséché et/ou comprimé en vue de son utilisation.

Le premier module d'échange thermique 5 comprend selon un mode de réalisation au moins un échangeur thermique 5a configuré pour assurer le transfert thermique du dihydrogène vers la vapeur d'eau. Selon un mode de réalisation préféré, le premier module d'échange thermique 5 comprend deux échangeurs thermiques 5a, 5 b agencés en série entre la première ligne d'alimentation 2 et la première ligne d'évacuation 4. Cette disposition permet de prévoir un deuxième échangeur thermique 5 b adapté à la température du dihydrogène en sortie de l'électrolyseur 1, classiquement de l'ordre de 700°C, et un premier échangeur thermique 5a plus habituel adapté à la température du dihydrogène après le passage dans un échangeur thermique, soit classiquement de l'ordre de 330°C. De cette manière, les composants sont optimisés pour les températures et transferts thermiques à réaliser.

Selon un mode de réalisation, le système comprend une deuxième ligne d'alimentation 10 apte à alimenter l'électrolyseur 1 en air. Préférentiellement, la deuxième ligne d'alimentation 10 reçoit de l'air. Selon une possibilité, la deuxième ligne d'alimentation 10 est configurée pour apporter à l'électrolyseur 1 de l'air, on entend par là que la deuxième ligne d'alimentation 10 peut apporter de l'air, l'air étant par exemple un mélange gazeux qui permet de balayer la cellule de l'électrolyseur1 et d'emporter le dioxygène produit par l'électrolyseur 1.

Selon ce mode de réalisation, il est avantageux que le système selon l'invention comprenne un deuxième module d'échange thermique 11 configuré pour assurer un échange thermique entre la deuxième ligne d'alimentation 10 en air et la deuxième ligne d'évacuation 3 du dioxygène. Ce module d'échange thermique 11 est configuré pour transférer les calories du dioxygène issu de l'électrolyseur 1 à l'air destiné à alimenter l'électrolyseur 1. Un flux de gaz de dioxygène assure l'augmentation de la température du flux d'air ce qui permet également de refroidir le flux de dioxygène évacué.

Le deuxième module d'échange thermique 11 comprend selon un mode de réalisation au moins un échangeur thermique 11a configuré pour assurer le transfert thermique du dioxygène vers l'air. Selon un mode de réalisation préféré, le deuxième module d'échange thermique 11 comprend deux échangeurs thermiques 11a, 11 b agencés en série entre la deuxième ligne d'alimentation 10 et la deuxième ligne d'évacuation 3. Cette disposition permet de prévoir un deuxième échangeur thermique 11 b adapté à la température du dioxygène en sortie de l'électrolyseur 1, classiquement de l'ordre de 700°C, et un premier échangeur thermique 11a plus habituel adapté à la température du dioxygène après le passage dans un échangeur thermique, soit classiquement de l'ordre de 330°C. De cette manière, les composants sont optimisés pour les températures et transferts thermiques à réaliser.

Le système comprend préférentiellement un compresseur 30 agencé sur la deuxième ligne d'alimentation 10 destinée à l'alimentation en air. Le compresseur 30 est préférentiellement agencé en amont du deuxième module d'échange thermique 11, s'il est présent. Le compresseur 30 est destiné à assurer la compression de l'air destiné à être fourni à l'électrolyseur 1. La compression de l'air contribue avantageusement à augmenter la température de l'air avant son entrée dans l'électrolyseur 1.

Selon une possibilité, le système comprend au moins une source de chaleur complémentaire configurée pour chauffer la vapeur d'eau entrant dans l'électrolyseur 1 jusqu'à une température cible prédéfinie. La source de chaleur complémentaire est avantageusement agencée sur la première ligne d'alimentation 2 en vapeur d'eau, préférentiellement en aval du premier module d'échange thermique 5. La source de chaleur complémentaire est par exemple un réchauffeur électrique 14.

Selon une possibilité, le système comprend au moins une source de chaleur complémentaire configurée pour chauffer l'air entrant dans l'électrolyseur 1 jusqu'à une température cible prédéfinie. La source de chaleur complémentaire est avantageusement agencée sur la deuxième ligne d'alimentation 10 en air, préférentiellement en aval du deuxième module d'échange thermique 11. La source de chaleur complémentaire est par exemple un réchauffeur électrique 13.

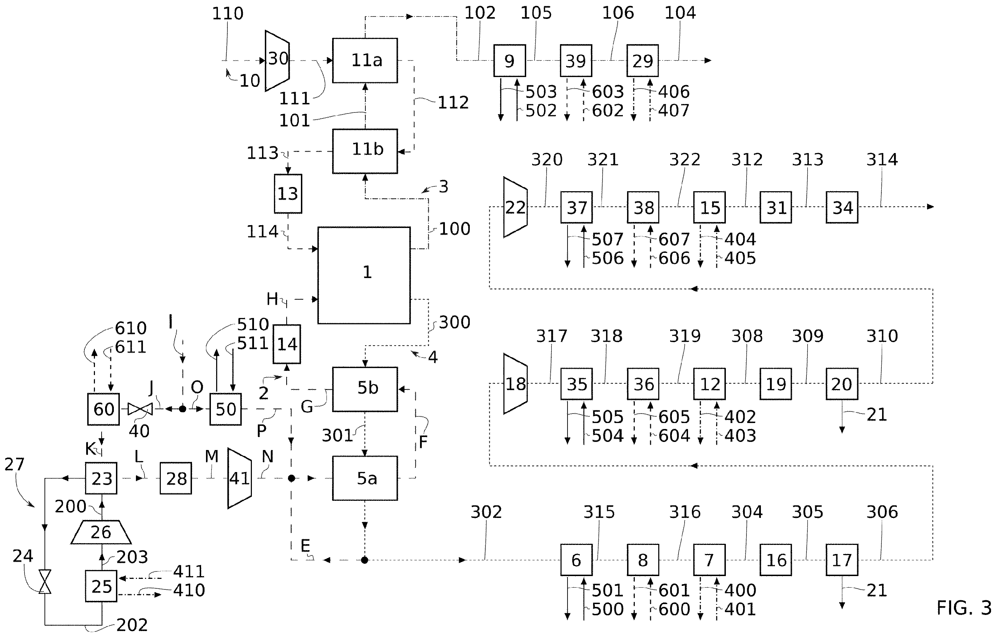

Selon une possibilité, le système comprend un générateur électrique de vapeur 28. Le générateur électrique de vapeur 28 est destiné à produire de la vapeur d'eau à partir d'eau liquide. Le générateur électrique de vapeur 28 est alimenté en énergie, notamment électrique, pour assurer l'augmentation de la température de l'eau liquide au-dessus de sa température d'évaporation. Le générateur électrique de vapeur 28 est un composant constituant la consommation principale en énergie d'un système d'électrolyseur selon l'état de la technique. Le générateur électrique de vapeur 28 est agencé sur la première ligne d'alimentation 2 en vapeur d'eau, préférentiellement en amont du premier module d'échange thermique 5. Le générateur électrique de vapeur 28 est agencé préférentiellement en aval du premier générateur de vapeur intermédiaire 50 de sorte à assurer l'évaporation de l'eau liquide avant qu'elle passe dans le générateur de vapeur 28 électrique ce qui limite la consommation électrique. L'eau en entrée est avantageusement déjà au moins partiellement dans un état diphasique. Classiquement, l'eau n'est pas à 100% à l'état vapeur. L'objectif de ce générateur de vapeur 28 est de produire de la vapeur surchauffée. À titre d'exemple, la température d'évaporation de l'eau liquide entrant dans le générateur électrique de vapeur 28 est de l'ordre de 110°C ou de l'ordre de70°C dans le cas d'un générateur de vapeur e dépression par exemple comme illustré en figure 3.

Selon un aspect de l'invention, le système comprend un module de récupération de l'énergie thermique du dihydrogène en sortie du module d'échange thermique 5 au profit de la première ligne d'alimentation 2 en vapeur d'eau.

Avantageusement, le module de récupération est dénommé premier module de récupération et comprend un premier échangeur intermédiaire 6, un premier circuit fluidique intermédiaire et un premier générateur de vapeur intermédiaire 50.

Le premier circuit fluidique intermédiaire est configuré pour recevoir un fluide intermédiaire et assuré la connexion fluidique entre le premier échangeur intermédiaire 6 et le premier générateur de vapeur intermédiaire 50. Ce circuit intermédiaire est avantageusement un circuit basse température. On entend par basse température une température des fluides circulants comprise entre 25°C et 90°C.

Le premier échangeur intermédiaire 6 agencé sur la première ligne d'évacuation 2 préférentiellement en aval du premier module d'échange thermique 5, plus précisément en aval du premier échangeur thermique 5a du premier module d'échange thermique 5, configuré pour transférer l'énergie thermique du dihydrogène au fluide intermédiaire. Le premier échangeur thermique 6 est connecté fluidiquement au circuit fluidique intermédiaire par une connexion fluidique 500 assurant la connexion fluidique du premier échangeur intermédiaire 6 au premier générateur de vapeur intermédiaire 50 et par une connexion fluidique 501 assurant la connexion fluidique du premier générateur de vapeur intermédiaire 50 au premier échangeur intermédiaire 6. À titre d'exemple, le fluide intermédiaire entrant dans le premier échangeur thermique 6 est à une température de l'ordre de la température ambiante, par exemple comprise entre 18 et 30°C et ressort dudit échangeur intermédiaire 6 à une température de l'ordre de 70°C. Avantageusement, le fluide entrant est à l'état diphasique c'est à dire qu'une partie est à l'état liquide et une autre partie est à l'état gazeux.

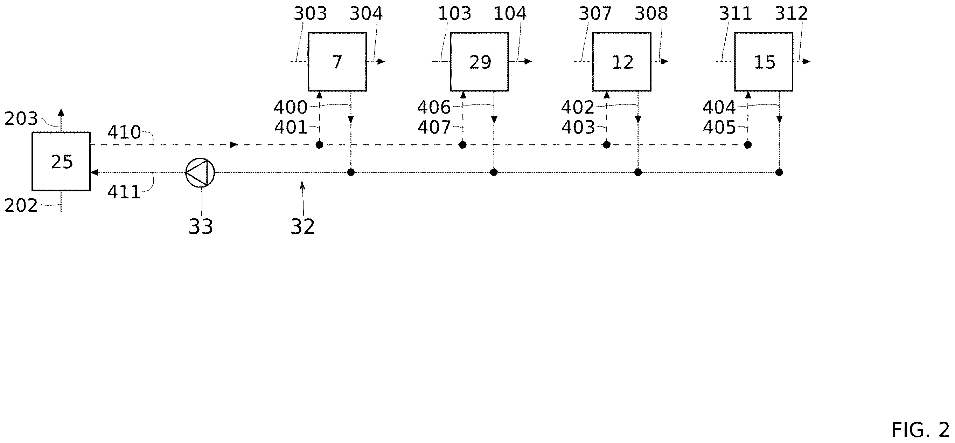

Le premier circuit fluidique repose sur le même principe que le troisième circuit intermédiaire 32, notamment illustré à la figure 2 et que le deuxième circuit intermédiaire. Préférentiellement, le premier circuit fluidique intermédiaire comprend une branche principale 510 agencée entre le premier générateur de vapeur intermédiaire 50 et la connexion fluidique 500 configurée pour la circulation du fluide intermédiaire du premier générateur de vapeur intermédiaire 50 vers le premier échangeur intermédiaire 6 et une branche principale 511 agencée entre la connexion fluidique 501 et le générateur de vapeur intermédiaire 50 configurée pour la circulation du fluide intermédiaire du premier échangeur intermédiaire 6 vers le premier générateur de vapeur intermédiaire 50. À titre d'exemple, le fluide intermédiaire entrant dans le premier générateur de vapeur intermédiaire 50 est à une température de l'ordre de la température ambiante soit par exemple comprise entre 18 et 30°C et ressort dudit générateur de vapeur intermédiaire 50 à une température de l'ordre de 110°C pour un générateur à pression atmosphérique et de l'ordre de 70°C dans le cas où le générateur de vapeur fonctionne en dépression comme par exemple illustré en figure 3.

Le premier générateur de vapeur intermédiaire 50 est configuré pour transférer l'énergie thermique du fluide intermédiaire à l'eau liquide circulant dans la première ligne d'alimentation 2 en vapeur. Le générateur de vapeur intermédiaire 50 est agencé sur la première ligne d'alimentation en vapeur 1, préférentiellement en amont du premier échangeur 5a du premier module d'échange thermique. Selon un premier mode de réalisation, le générateur de vapeur intermédiaire 50 est agencé sur la première ligne d'alimentation en vapeur 1 en amont du générateur de vapeur électrique 28. Selon un deuxième mode de réalisation, le générateur de vapeur intermédiaire 50 est agencé sur la première ligne d'alimentation en vapeur 1 en parallèle du générateur de vapeur électrique 28.

Selon un aspect de l'invention, le système comprend un deuxième module de récupération de l'énergie thermique du dihydrogène en sortie du module d'échange thermique 5 au profit de la première ligne d'alimentation 2 en vapeur d'eau. Selon l'invention, le deuxième module de récupération de l'énergie thermique est un module de récupération en dépression.

Avantageusement, le module de récupération en dépression comprend un échangeur intermédiaire 8, dénommé troisième échangeur intermédiaire 8, un circuit fluidique intermédiaire dénommé deuxième circuit fluidique intermédiaire, un générateur de vapeur intermédiaire 60 dénommé deuxième générateur intermédiaire, un détendeur 40 et un compresseur 41.

Le détendeur 40 et le compresseur 41 sont agencés sur la première ligne d'alimentation en vapeur 1 et définissent entre eux un tronçon en dépression. Le tronçon en dépression de la première ligne d'alimentation en vapeur 1 s'étend depuis la sortie du détendeur 40 à l'entrée du compresseur 41. Le détendeur 40 et le compresseur 41 sont tous les deux agencés sur la première ligne d'alimentation en vapeur 1 en amont du premier module d'échange thermique 5. Le tronçon en dépression comprend selon un mode de réalisation illustré à la figure 3, le générateur de vapeur intermédiaire, la connexion fluidique K, le condenseur 23, la connexion fluidique L, le générateur de vapeur électrique 28, la connexion fluidique M.

Le deuxième circuit fluidique intermédiaire est configuré pour recevoir un fluide intermédiaire et assurer la connexion fluidique entre l'échangeur intermédiaire 8 et le générateur de vapeur intermédiaire 60. Ce circuit intermédiaire est avantageusement un circuit basse température. On entend par basse température une température des fluides circulants comprise entre 25°C et 90°C.

Le troisième échangeur thermique intermédiaire 8 est agencé sur la première ligne d'évacuation 4 de dihydrogène, en aval du premier module d'échange thermique 5, plus préférentiellement en aval du premier échangeur thermique intermédiaire 6 et préférentiellement en amont d'un deuxième échangeur intermédiaire 7, préférentiellement en amont d'un éventuel aéroréfrigérant 16 et/ou séparateur liquide /gaz 17.

Le module de récupération en dépression comprend un deuxième générateur intermédiaire 60 agencé sur la première ligne d'alimentation en vapeur, avantageusement sur le tronçon en dépression. Préférentiellement, le générateur intermédiaire 60 est agencé en amont du condenseur 23 qui est avantageusement agencé sur le tronçon en dépression dans le cas où celui-ci est présent.

Le deuxième générateur de vapeur intermédiaire 60 est configuré pour transférer l'énergie thermique du fluide intermédiaire à l'eau liquide circulant dans la première ligne d'alimentation 2 en vapeur. Le générateur de vapeur intermédiaire 60 est agencé sur la première ligne d'alimentation en vapeur 1 sur le tronçon en dépression c'est-à-dire entre le détendeur 40 et le compresseur 41. Le générateur de vapeur intermédiaire 60 est agencé préférentiellement en amont du générateur de vapeur électrique 28. Ainsi, le module de récupération en dépression propose de réduire la pression dans un tronçon de la première ligne d'alimentation 2 en vapeur d'eau afin de diminuer la température d'ébullition de l'eau circulant dans la première ligne d'alimentation 2. La dépression est ensuite préférentiellement compensée par une recompression jusqu'à la pression atmosphérique. Le tronçon qui est dépressurisé entoure au moins le deuxième générateur intermédiaire de vapeur 60 et préférentiellement également le compresseur 23 et/ou le générateur électrique 28.

Préférentiellement, l'ébullition de l'eau s'effectue à une température inférieure à la température du rejet thermique de l'électrolyseur 1 et en particulier la température du dioxygène et du dihydrogène, ce qui favorise l'échange et donc l'exploitation des rejets thermiques.

Selon un mode de réalisation, le système comprend au moins une pompe agencée sur la première ligne d'alimentation 2 en vapeur d'eau configurée pour mettre en mouvement l'eau liquide dans la première ligne d'alimentation 2.

Le troisième échangeur thermique 8 est connecté fluidiquement au deuxième circuit fluidique intermédiaire par une connexion fluidique 600 assurant la connexion fluidique du troisième échangeur intermédiaire 8 au deuxième générateur de vapeur intermédiaire 60 et par une connexion fluidique 601 assurant la connexion fluidique du deuxième générateur de vapeur intermédiaire 60 à l'échangeur intermédiaire 8.

Préférentiellement, le circuit fluidique intermédiaire comprend une branche principale 610 agencée entre le deuxième générateur de vapeur intermédiaire 60 et la connexion fluidique 600 configurée pour la circulation du fluide intermédiaire du générateur de vapeur intermédiaire 60 vers le troisième échangeur intermédiaire 8 et une branche principale 611 agencée entre la connexion fluidique 601 et le générateur de vapeur intermédiaire 60 configurée pour la circulation du fluide intermédiaire de l'échangeur intermédiaire 8 vers le générateur de vapeur intermédiaire 60. À titre d'exemple, le fluide intermédiaire entrant dans le générateur de vapeur intermédiaire 60 est à une température de l'ordre de 90°C et ressort dudit générateur de vapeur intermédiaire 60 à une température de l'ordre de 35°C.

Selon un aspect de l'invention, le système comprend un troisième module de récupération de l'énergie thermique du dihydrogène en sortie du module d'échange thermique 5 au profit de la première ligne d'alimentation 2 en vapeur d'eau.

Selon une possibilité, le module de récupération comprend une pompe à chaleur et un circuit intermédiaire.

Avantageusement, le circuit intermédiaire comprend un troisième circuit fluidique intermédiaire 32 configuré pour recevoir un fluide intermédiaire et un deuxième échangeur intermédiaire 7 agencé sur la première ligne d'évacuation 2 préférentiellement en aval du premier module d'échange thermique 5, plus précisément en aval du premier échangeur thermique 5a du premier module d'échange thermique 5, configuré pour transférer l'énergie thermique du dihydrogène au fluide intermédiaire, préférentiellement en aval du premier échangeur thermique intermédiaire 6. Le troisième circuit fluidique intermédiaire 32 permet d'assurer la connexion fluidique entre le deuxième échangeur intermédiaire 7 et la pompe à chaleur. Ce troisième circuit intermédiaire 32 est avantageusement un circuit basse température. On entend par basse température une température des fluides circulants comprise entre 25°C et 90°C.

Le deuxième échangeur thermique 7 est connecté fluidiquement au troisième circuit fluidique intermédiaire 32 par une connexion fluidique 400 assurant la connexion fluidique du deuxième échangeur intermédiaire 7 à l'évaporateur 25 et par une connexion fluidique 401 assurant la connexion fluidique de l'évaporateur 25 au deuxième échangeur intermédiaire 7. À titre d'exemple, le fluide intermédiaire entrant dans le deuxième échangeur thermique 7 est à une température de l'ordre de 25°C et ressort dudit deuxième échangeur thermique 7 à une température de l'ordre de 70°C [. A titre d'exemple, ces températures sont valables pour les différents échangeurs thermiques agencés sur le premier circuit intermédiaire et sur le deuxième circuit intermédiaire.

Préférentiellement, le troisième circuit fluidique intermédiaire 32 comprend une branche principale 410 agencée entre l'évaporateur 25 et la connexion fluidique 401 configurée pour la circulation du fluide intermédiaire de l'évaporateur 25 vers l'échangeur intermédiaire et une branche principale 411 agencée entre la connexion fluidique 400 et l'évaporateur 25 configurée pour la circulation du fluide intermédiaire de l'échangeur intermédiaire vers l'évaporateur 25. À titre d'exemple, le fluide intermédiaire entrant dans l'évaporateur 25 est à une température de l'ordre de 90°C et ressort dudit évaporateur 25 à une température de l'ordre de 35°C.

La pompe à chaleur est configurée pour transférer l'énergie thermique du fluide intermédiaire à l'eau liquide circulant dans la première ligne d'alimentation 2 en vapeur.

La pompe à chaleur comprend un condenseur 23, un détendeur 24, au moins un évaporateur 25, et un compresseur 26. La pompe à chaleur comprend un circuit fluidique 27 apte à recevoir un fluide caloporteur.

Le fluide caloporteur est par un exemple un fluide classiquement utilisé dans des pompes à chaleur tel que 1234yf : 2,3,3,3-tétrafluoropropène (HFO-1234yf), ou R245FA pentafluoropropane, ou R290 propane

Le circuit fluidique 27 assure la connexion fluidique des composants de la pompe à chaleur, préférentiellement en circuit fermé.

Selon un mode de réalisation, le circuit fluidique 27 comprend une connexion fluidique 200 connectée entre la sortie du compresseur 26 et l'entrée du condenseur 23. Avantageusement, le circuit fluidique 27 comprend une connexion fluidique 201 connectée entre la sortie du condenseur 23 et l'entrée du détendeur 24. Avantageusement, le circuit fluidique 27 comprend une connexion fluidique 202 connectée entre la sortie du détendeur 24 et l'entrée de l'évaporateur 25. Avantageusement, le circuit fluidique 27 comprend une connexion fluidique 203 connectée entre la sortie de l'évaporateur 25 et l'entrée du compresseur 26.

Selon l'invention, le condenseur 23 de la pompe à chaleur est agencé sur la première ligne d'alimentation 2 en vapeur d'eau, préférentiellement en amont du premier générateur de vapeur intermédiaire 50 ou de la connexion fluidique de sortie du premier générateur de vapeur intermédiaire 50. Cette disposition permet de transmettre des calories depuis le fluide caloporteur au profit de l'eau liquide circulant dans la première ligne d'alimentation 2 en amont du premier générateur de vapeur intermédiaire 50 et préférentiellement en amont du générateur électrique de vapeur 28. À titre d'exemple, l'eau entrant dans le condenseur 23 est à une température de l'ordre de la température ambiante dans le mode de réalisation à pression atmosphérique tel que par exemple illustré en fi-gure 1 et ressort dudit condenseur 23 une température de l'ordre de 110°C. ou l'eau entrant dans le condenseur 23 est à une température de l'ordre de l'ordre de 70°C, avantageusement à l'état diphasique dans le mode de réalisation en dépression tel que par exemple illustré en figure 3 et ressort dudit condenseur 23 une température de l'ordre de 75°C.

La présente invention permet d'exploiter la chaleur fatale du système et plus particulièrement les rejets thermiques du dihydrogène produit. La pompe à chaleur est un système actif permettant de réinjecter en amont du premier générateur de vapeur intermédiaire 6, et préférentiellement en amont du générateur électrique de vapeur 28, et à une température supérieure à la température d'évaporation de l'eau les calories prélevées sur le dihydrogène produit.

Selon un mode de réalisation, le premier module de récupération du système comprend un quatrième échangeur thermique intermédiaire 9 agencé sur la première ligne d'alimentation 2 en vapeur d'eau et sur la deuxième ligne d'évacuation 3 du dioxygène. Le quatrième échangeur thermique intermédiaire 9 est préférentiellement agencé sur la deuxième ligne d'évacuation 3. Ce quatrième échangeur thermique intermédiaire 9 est configuré pour assurer le transfert thermique de calories prélevées sur le flux de dioxygène évacué de l'électrolyseur 1 et circulant dans la deuxième ligne d'évacuation 3 au profit de la ligne d'alimentation 2 en vapeur d'eau par l'intermédiaire du premier circuit fluidique intermédiaire et du premier générateur de vapeur intermédiaire 50.

Le quatrième échangeur thermique 9 est connecté fluidiquement au circuit fluidique intermédiaire par une connexion fluidique 503 assurant la connexion fluidique du quatrième échangeur intermédiaire 9 au premier générateur de vapeur 50 et par une connexion fluidique 502 assurant la connexion fluidique du premier générateur de vapeur 50 au quatrième échangeur intermédiaire 9.

Préférentiellement, la connexion fluidique 503 est connectée fluidique à la branche principale 511 configurée pour la circulation du fluide intermédiaire de l'échangeur intermédiaire 9 vers le premier générateur de vapeur 50. Préférentiellement, la connexion fluidique 502 est connectée fluidiquement à la branche principale 510 configurée pour la circulation du fluide intermédiaire vers l'échangeur intermédiaire 9.

Le quatrième échangeur intermédiaire 9 est avantageusement agencé en parallèle du premier échangeur intermédiaire 6.

Selon un mode de réalisation préféré, le troisième module de récupération et plus précisément le circuit intermédiaire comprend un septième échangeur intermédiaire 29 agencé sur la deuxième ligne d'évacuation 3 de dihydrogène. Le septième échangeur intermédiaire 29 est un échangeur thermique configuré pour assurer le transfert des calories du dihydrogène évacué de l'électrolyseur 1 au profit du fluide intermédiaire en vue d'être utilisé dans la pompe à chaleur du troisième module de récupération.

Le septième échangeur thermique 29 est connecté fluidiquement au circuit fluidique intermédiaire 32 par une connexion fluidique 406 assurant la connexion fluidique du septième échangeur intermédiaire 29 à l'évaporateur 25 et par une connexion fluidique 407 assurant la connexion fluidique de l'évaporateur 25 au septième échangeur intermédiaire 29.

Préférentiellement, la connexion fluidique 406 est connectée fluidique à la branche principale 411 configurée pour la circulation du fluide intermédiaire 29 de l'échangeur intermédiaire vers l'évaporateur 25. Préférentiellement, la connexion fluidique 407 est connectée fluidique à la branche principale 410 configurée pour la circulation du fluide intermédiaire 29 vers l'échangeur intermédiaire.

Selon un mode de réalisation, le deuxième module de récupération du système comprend un douzième échangeur thermique intermédiaire 39 agencé sur la deuxième ligne d'évacuation 3 du dioxygène et sur le deuxième circuit intermédiaire. Ce douzième échangeur thermique intermédiaire 39 est configuré pour assurer le transfert thermique de calories prélevées sur le flux de dioxygène évacué de l'électrolyseur 1 et circulant dans la deuxième ligne d'évacuation 3 au profit de la ligne d'alimentation 2 en vapeur d'eau par l'intermédiaire du deuxième circuit fluidique intermédiaire et du deuxième générateur de vapeur intermédiaire 60.

Le douzième échangeur thermique 39 est connecté fluidiquement au circuit fluidique intermédiaire par une connexion fluidique 603 assurant la connexion fluidique du douzième échangeur intermédiaire 39 au deuxième générateur de vapeur 60 et par une connexion fluidique 602 assurant la connexion fluidique du deuxième générateur de vapeur 60 au douzième échangeur intermédiaire 39.

Préférentiellement, la connexion fluidique 603 est connectée fluidique à la branche principale 1 configurée pour la circulation du fluide intermédiaire de l'échangeur intermédiaire 39 vers le deuxième générateur de vapeur 60. Préférentiellement, la connexion fluidique 602 est connectée fluidiquement à la branche principale 0 configurée pour la circulation du fluide intermédiaire vers l'échangeur intermédiaire 39.

Le douzième échangeur intermédiaire 39 est avantageusement agencé en parallèle du troisième échangeur intermédiaire 8.

Selon un mode de réalisation, le système comprend des moyens de traitement du flux de dihydrogène produit. Le dihydrogène produit par l'électrolyseur 1 et qui ressort de celui-ci par la première ligne d'évacuation 4 présente tout d'abord une température très élevée correspondant à la température de réaction de l'électrolyseur 1. Or, en vue de son utilisation, le dihydrogène doit préférentiellement être ramené à une température proche de la température ambiante. Par ailleurs, le dihydrogène évacué de l'électrolyseur 1 par la première ligne d'évacuation 4 peut comprendre de la vapeur d'eau emportée avec le flux de dihydrogène. Il est donc également préféré de séparer le dihydrogène de l'éventuelle vapeur d'eau emportée avec, en l'asséchant.

Le système selon l'invention comprend avantageusement à cet effet au moins un premier étage de traitement destiné à l'assèchement et/ou compression du dihydrogène produit.

Avantageusement, le premier étage de traitement est avantageusement agencé en aval du deuxième échangeur intermédiaire 7 du troisième module de récupération.

Selon une possibilité, le premier étage de traitement comprend un échangeur thermique. L'échangeur thermique est agencé sur la première ligne d'évacuation 4, préférentiellement en aval de l'échangeur intermédiaire 7. Cet échangeur thermique est selon une première possibilité un aéroréfrigérant 16, c'est-à-dire un échangeur thermique entre un fluide et un gaz, le gaz étant mis en mouvement par un ventilateur. Selon une autre possibilité, l'échangeur thermique est un refroidisseur standard, c'est-à-dire sans ventilateur, cette solution étant toutefois moins efficace. Selon la possibilité non représentée sur les figures, l'échangeur thermique assure l'échange thermique entre le fluide et un gaz et en particulier de l'air destiné à l'alimentation de l'électrolyseur 1.

Le premier étage de traitement comprend avantageusement un séparateur de liquide/gaz 17 agencé en aval de l'aéroréfrigérant 16. Le séparateur 17 permet de séparer l'eau liquide du dihydrogène gazeux, l'eau liquide résultant du refroidissement de la vapeur d'eau dans l'aéroréfrigérant 16 en dessous de son point de condensation.

Selon une possibilité préférée, le système comprend un deuxième étage de traitement agencé en aval du premier étage de traitement sur la première ligne d'évacuation 4. Le deuxième étage de traitement permet de compléter l'assèchement du dihydrogène. Le deuxième étage de traitement comprend avantageusement un échangeur thermique qui comme pour le premier étage peut être un refroidisseur standard, un aéroréfrigérant 19 ou troisième échangeur thermique entre un fluide (dihydrogène) et l'air destiné à l'alimentation de l'électrolyseur 1. Le deuxième étage comprend un séparateur de liquide/gaz 20. Préférentiellement, le système comprend entre le premier étage de traitement et le deuxième étage de traitement un compresseur 18 configuré pour permettre le deuxième traitement par l'aéroréfrigérant 19 en augmentant au préalable la température du mélange de sorte à pouvoir le refroidir à nouveau.

À l'issue du premier étage de traitement et/ou du deuxième étage de traitement, si présent, l'eau liquide est préférentiellement recyclée en étant renvoyée vers la première ligne d'alimentation 2 en vapeur d'eau par une ligne de recyclage d'eau 21. La ligne de recyclage d'eau est connectée fluidiquement à la première ligne d'alimentation 2, préférentiellement en amont du premier générateur intermédiaire 50. Le dihydrogène est quant à lui utilisé et notamment stocké après des traitements classiques.

Le système comprend préférentiellement une pompe sur la ligne de recyclage d'eau 21. La pompe est configurée pour mettre en mouvement l'eau liquide circulant dans la ligne de recyclage d'eau 21 et issue notamment des séparateurs de gaz/liquide 17, 20.

Selon un mode de réalisation préférée de l'invention, le troisième module de récupération et plus spécifiquement le circuit intermédiaire comprend un échangeur intermédiaire agencé au niveau d'un étage de traitement, préférentiellement au niveau de chaque étage de traitement.

Le circuit intermédiaire du troisième module de récupération comprend avantageusement un échangeur intermédiaire 12 dénommé cinquième échangeur intermédiaire 12 sans être limitatif ou en lien avec la nécessité d'avoir d'autre échangeur intermédiaire. Le cinquième échangeur intermédiaire 12 est agencé préférentiellement en aval du compresseur 18 et préférentiellement en amont de l'aéroréfrigérant 19.

Le circuit intermédiaire du troisième module de récupération comprend avantageusement un échangeur intermédiaire 15 dénommé sixième échangeur intermédiaire 15 sans être limitatif ou en lien avec la nécessité d'avoir d'autre échangeur intermédiaire. Le sixième échangeur intermédiaire 15 est agencé préférentiellement en aval du compresseur 22 et préférentiellement en amont de l'aéroréfrigérant 31.

Si le système comprend d'autres étages de traitement en aval du deuxième étage de traitement, le troisième module de récupération peut comprend un énième échangeur intermédiaire agencé au niveau de cet autre étage de traitement avantageusement en aval d'un compresseur et en amont d'un aéroréfrigérant.

Selon un mode de réalisation de l'invention les échangeurs intermédiaires du circuit intermédiaire sont agencés sur le circuit fluidique intermédiaire en parallèle les uns des autres comme illustré à la figure 2. Cette disposition facilite grandement la modularité du système et du nombre d'échangeurs intermédiaires utilisés.

Le cinquième échangeur intermédiaire 12 est connecté fluidiquement à la branche principale 410 par une connexion fluidique 403 et à la branche principale 411 par une connexion fluidique 402.

Le sixième échangeur intermédiaire 15 est connecté fluidiquement à la branche principale 410 par une connexion fluidique 405 et à la branche principale 411 par une connexion fluidique 404.

Selon une possibilité non représentée, le système comprend un échangeur intermédiaire agencé sur une source de chaleur froide extérieure au système tel que par exemple une source de rejets thermiques.

Selon un mode de réalisation préférée de l'invention, le premier module de récupération et plus spécifiquement le circuit fluidique intermédiaire comprend un échangeur intermédiaire agencé au niveau d'un étage de traitement, préférentiellement au niveau de chaque étage de traitement.

Le premier module de récupération comprend avantageusement un échangeur intermédiaire 35 dénommé huitième échangeur intermédiaire 35 sans être limitatif ou en lien avec la nécessité d'avoir d'autre échangeur intermédiaire. Le huitième échangeur intermédiaire 35 est agencé préférentiellement en aval du compresseur 18 et préférentiellement en amont de l'aéroréfrigérant 19.

Le premier module de récupération comprend avantageusement un échangeur intermédiaire 37 dénommé dixième échangeur intermédiaire 37 sans être limitatif ou en lien avec la nécessité d'avoir d'autre échangeur intermédiaire. Le dixième échangeur intermédiaire 37 est agencé préférentiellement en aval du compresseur 22 et préférentiellement en amont de l'aéroréfrigérant 31.

Si le système comprend d'autres étages de traitement en aval du deuxième étage de traitement, le troisième module de récupération peut comprend un énième échangeur intermédiaire agencé au niveau de cet autre étage de traitement avantageusement en aval d'un compresseur et en amont d'un aéroréfrigérant.

Selon un mode de réalisation de l'invention les échangeurs intermédiaires du circuit intermédiaire sont agencés sur le circuit fluidique intermédiaire en parallèle les uns des autres comme illustré à la figure 2 pour le circuit fluidique 32. Cette disposition facilite grandement la modularité du système et du nombre d'échangeurs intermédiaires utilisés.

Le huitième échangeur intermédiaire 35 est connecté fluidiquement à la branche principale 510 par une connexion fluidique 504 et à la branche principale 511 par une connexion fluidique 505.

Le dixième échangeur intermédiaire 37 est connecté fluidiquement à la branche principale 510 par une connexion fluidique 506 et à la branche principale 511 par une connexion fluidique 507.

Selon un mode de réalisation préférée de l'invention, le deuxième module de récupération et plus spécifiquement le circuit fluidique intermédiaire comprend un échangeur intermédiaire agencé au niveau d'un étage de traitement, préférentiellement au niveau de chaque étage de traitement.

Le deuxième module de récupération comprend avantageusement un échangeur intermédiaire 36 dénommé neuvième échangeur intermédiaire 36 sans être limitatif ou en lien avec la nécessité d'avoir d'autre échangeur intermédiaire. Le neuvième échangeur intermédiaire 36 est agencé préférentiellement en aval du compresseur 18 et préférentiellement en amont de l'aéroréfrigérant 19.

Le deuxième module de récupération comprend avantageusement un échangeur intermédiaire 38 dénommé onzième échangeur intermédiaire 38 sans être limitatif ou en lien avec la nécessité d'avoir d'autre échangeur intermédiaire. Le onzième échangeur intermédiaire 38 est agencé préférentiellement en aval du compresseur 22 et préférentiellement en amont de l'aéroréfrigérant 31.

Si le système comprend d'autres étages de traitement en aval du deuxième étage de traitement, le troisième module de récupération peut comprend un énième échangeur intermédiaire agencé au niveau de cet autre étage de traitement avantageusement en aval d'un compresseur et en amont d'un aéroréfrigérant.

Selon un mode de réalisation de l'invention les échangeurs intermédiaires du circuit intermédiaire sont agencés sur le circuit fluidique intermédiaire en parallèle les uns des autres comme illustré à la figure 2 pour le circuit fluidique 32. Cette disposition facilite grandement la modularité du système et du nombre d'échangeurs intermédiaires utilisés.

Le neuvième échangeur intermédiaire 36 est connecté fluidiquement à la branche principale 610 par une connexion fluidique 604 et à la branche principale 611 par une connexion fluidique 605.

Le onzième échangeur intermédiaire 38 est connecté fluidiquement à la branche principale 610 par une connexion fluidique 606 et à la branche principale 611 par une connexion fluidique 607.

L'électrolyseur 1 reçoit de la vapeur d'eau et avantageusement de l'air et rejette du dihydrogène et du dioxygène.

Les connexions fluidiques sont préférentiellement directes, selon une possibilité des organes supplémentaires peuvent être intégrés en respectant le positionnement relatif des composants cités ci-dessous.

Préférentiellement, l'électrolyseur 1 est connecté fluidiquement à la première ligne d'alimentation 2 en vapeur d'eau. La première ligne d'alimentation 2 en vapeur assure la connexion fluidique de composants agencés en amont de l'électrolyseur 1 sur ladite première ligne d'alimentation 2. La description qui suit est faite en débutant en amont de l'électrolyseur 1 et en suivant le sens de circulation de l'eau et/ou de la vapeur dans la première ligne d'alimentation 2.

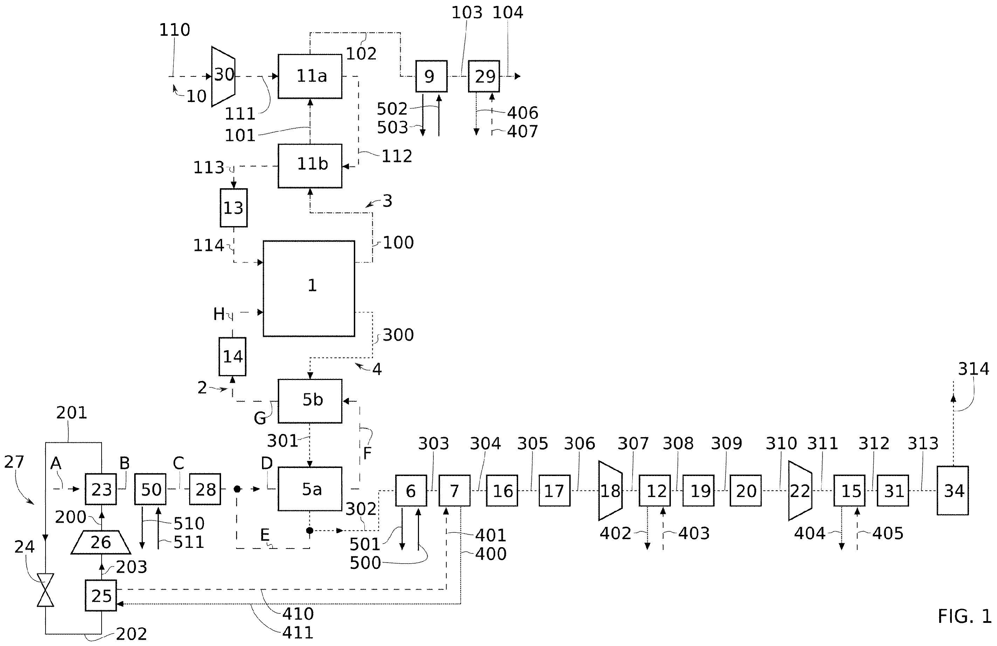

Selon le mode de réalisation illustré à la figure 1, la première ligne d'alimentation 2 assure la connexion fluidique à l'entrée du condenseur 23, puis la connexion fluidique de la sortie du condenseur 23 à l'entrée du premier générateur de vapeur intermédiaire 50, la connexion fluidique de la sortie du premier générateur de vapeur intermédiaire 50 à l'entrée du générateur électrique de vapeur 28, puis la connexion fluidique de la sortie du générateur électrique de vapeur 28 à l'entrée du premier module d'échange thermique 5, préférentiellement au premier échangeur thermique 5a, puis la connexion fluidique de la sortie du premier échangeur thermique 5a à l'entrée du deuxième échangeur thermique 5b, puis la connexion fluidique de la sortie du deuxième échangeur thermique 5 b à l'entrée du réchauffeur électrique 14, puis la connexion fluidique de la sortie du réchauffeur électrique 14 à l'entrée de l'électrolyseur 1.

Selon le mode de réalisation illustré à la figure 2, l'arrivée d'eau alimente deux branches parallèles. Une première branche correspondant à la portion en dépression comprenant avantageusement, une connexion fluidique J assurant l'arrivée d'eau liquide dans le détendeur 40, puis la connexion fluidique de la sortie du détendeur 40 à l'entrée du deuxième générateur de vapeur intermédiaire 60 basse pression, puis la connexion fluidique de la sortie du deuxième générateur de vapeur intermédiaire 60 avantageusement à l'entrée du condenseur 23 si présent, puis la connexion fluidique de la sortie du condenseur 23 à l'entrée du générateur de vapeur électrique 28, puis la connexion fluidique de la sortie du générateur de vapeur électrique 28 à l'entrée du compresseur 41. Une deuxième branche correspondant à la ligne d'alimentation à pression atmosphérique et comprenant avantageusement une connexion fluidique O assurant l'arrivée d'eau liquide dans le premier générateur intermédiaire 50 puis une connexion fluidique P assurant la sortie de la vapeur d'eau du premier générateur intermédiaire 50 et avantageusement la connexion avec la connexion fluidique N de sortie du compresseur 41 débouchant alors en entrée du module d'échange thermique 5.

Préférentiellement, l'électrolyseur 1 est connecté fluidiquement à une première ligne d'évacuation 4 de dihydrogène. La première ligne d'évacuation 4 assure la connexion fluidique de composants agencés en aval de l'électrolyseur 1 sur ladite première ligne d'évacuation 4. La description qui suit est faite en débutant de l'électrolyseur 1 et en suivant le sens de circulation dans la première ligne d'évacuation 4 depuis l'électrolyseur 1.

Selon le mode de réalisation illustré à la figure 1, la première ligne d'évacuation 4 assure la connexion fluidique de l'électrolyseur 1 avec l'entrée du premier module d'échange thermique 5, plus préférentiellement avec le deuxième échangeur thermique 5 b, puis la connexion fluidique du deuxième échangeur thermique 5 b au premier échangeur thermique 5a, puis la connexion fluidique du premier échangeur thermique 5a à l'entrée du premier échangeur thermique intermédiaire 6, puis la connexion fluidique de la sortie du premier échangeur thermique intermédiaire 6 à l'entrée du deuxième échangeur intermédiaire 7, puis la connexion fluidique de la sortie du deuxième échangeur intermédiaire 7 à l'entrée de l'aéroréfrigérant 16, puis la connexion fluidique de l'entrée de l'aéroréfrigérant à l'entrée du séparateur liquide/gaz 17, puis la connexion fluidique de la sortie du séparateur liquide/gaz 17 à l'entrée du compresseur 18, puis avantageusement la connexion fluidique de la sortie du compresseur 18 à l'entrée du cinquième échangeur intermédiaire 12, puis la connexion fluidique du cinquième échangeur intermédiaire 12 à l'aéroréfrigérant 19, puis la connexion fluidique de l'aéroréfrigérant 19 au séparateur liquide/gaz 20, avantageusement, la connexion fluidique de la sortie du séparateur liquide/gaz 20 à l'entrée du compresseur 22, puis la connexion fluidique de la sortie du compresseur à l'entrée d'un sixième échangeur thermique 15, puis la connexion fluidique de la sortie du sixième échangeur thermique 15 à l'entrée d'un aéroréfrigérant 31, puis la connexion fluidique de la sortie de l'aéroréfrigérant 31 à l'entrée du séparateur 34, puis de la sortie du séparateur 34 vers directement ou indirectement le stockage du dihydrogène.

Selon le mode de réalisation illustré à la figure 2, la première ligne d'évacuation 4 assure la connexion fluidique de l'électrolyseur 1 avec l'entrée du premier module d'échange thermique 5, plus préférentiellement avec le deuxième échangeur thermique 5 b, puis la connexion fluidique du deuxième échangeur thermique 5 b au premier échangeur thermique 5a, puis la connexion fluidique du premier échangeur thermique 5a à l'entrée du premier échangeur thermique intermédiaire 6, puis la connexion fluidique de la sortie du premier échangeur thermique intermédiaire 6 à l'entrée du troisième échangeur intermédiaire 8, puis la connexion fluidique de la sortie troisième échangeur intermédiaire 8 à l'entrée du deuxième échangeur intermédiaire 7, puis la connexion fluidique de la sortie du deuxième échangeur intermédiaire 7 à l'entrée de l'aéroréfrigérant 16, puis la connexion fluidique de l'entrée de l'aéroréfrigérant à l'entrée du séparateur liquide/gaz 17, puis la connexion fluidique de la sortie du séparateur liquide/gaz 17 à l'entrée du compresseur 18, puis avantageusement la connexion fluidique de la sortie du compresseur 18 à l'entrée du huitième échangeur intermédiaire 35, puis la connexion fluidique de la sortie du huitième échangeur intermédiaire 35 à l'entrée du neuvième échangeur intermédiaire 36, puis la connexion fluidique de la sortie du neuvième échangeur intermédiaire 36 à l'entrée du cinquième échangeur intermédiaire 12, puis la connexion fluidique du cinquième échangeur intermédiaire 12 à l'aéroréfrigérant 19, puis la connexion fluidique de l'aéroréfrigérant 19 au séparateur liquide/gaz 20, avantageusement, la connexion fluidique de la sortie du séparateur liquide/gaz 20 à l'entrée du compresseur 22, puis la connexion fluidique de la sortie du compresseur à l'entrée dixième échangeur intermédiaire 37, puis la connexion fluidique de la sortie du dixième échangeur intermédiaire 37 à l'entrée onzième échangeur intermédiaire 38, puis la connexion fluidique de la sortie onzième échangeur intermédiaire 38 à l'entrée du sixième échangeur thermique 15, puis la connexion fluidique de la sortie du sixième échangeur thermique 15 à l'entrée d'un aéroréfrigérant 31, puis la connexion fluidique de la sortie de l'aéroréfrigérant 31 à l'entrée du séparateur 34, puis de la sortie du séparateur 34 vers directement ou indirectement le stockage du dihydrogène.

Préférentiellement, l'électrolyseur 1 est connecté fluidiquement à une deuxième ligne d'évacuation 3 de dioxygène. La deuxième ligne d'évacuation 3 assure la connexion fluidique de composants agencés en aval de l'électrolyseur 1 sur ladite deuxième ligne d'évacuation 3. La description qui suit est faite en débutant de l'électrolyseur 1 et en suivant le sens de circulation dans la deuxième ligne d'évacuation 3 depuis l'électrolyseur 1. La deuxième ligne d'évacuation 3 assure la connexion fluidique de l'électrolyseur 1 avec le deuxième module d'échange thermique 11, plus préférentiellement avec le deuxième échangeur thermique 11 b, puis la connexion fluidique du deuxième échangeur thermique 11 b au premier échangeur thermique 11a, puis la connexion fluidique du premier échangeur thermique 11a à l'entrée du quatrième échangeur intermédiaire 9, puis la connexion fluidique de la sortie du quatrième l'échangeur intermédiaire 9 à l'entrée du septième échangeur intermédiaire 29, puis une connexion fluidique de sortie du septième échangeur intermédiaire 29 selon le mode de réalisation illustrée à la figure 1 ou selon le mode de réalisation illustrée à la figure 2, la connexion fluidique de la sortie du quatrième échangeur intermédiaire 9 à l'entrée du douzième échangeur intermédiaire 39, puis la connexion fluidique de la sortie du deuxième échangeur intermédiaire 39 à l'entrée du septième échangeur intermédiaire 29, puis une connexion fluidique de sortie du septième échangeur intermédiaire 29.

Préférentiellement, l'électrolyseur 1 est connecté fluidiquement à la deuxième ligne d'alimentation 10 en air. La deuxième ligne d'alimentation 10 assure la connexion fluidique de composants agencés en amont de l'électrolyseur 1 sur ladite deuxième ligne d'alimentation 10. La deuxième ligne d'alimentation 10 assure la connexion fluidique du compresseur 12 au premier échangeur thermique 11a, puis la connexion fluidique du premier échangeur thermique 11a au deuxième échangeur thermique 11b, puis la connexion fluidique du deuxième échangeur thermique 11 b au réchauffeur électrique 13, puis la connexion fluidique du réchauffeur électrique 13 à l'électrolyseur 1. Selon une possibilité non représentée, en amont du compresseur 30, la deuxième ligne d'alimentation assure la connexion fluidique d'un échangeur thermique remplaçant l'aéroréfrigérant 16 et/ou 19 au compresseur 30.

Le circuit intermédiaire tel qu'illustré à la figure 2 comprend un circuit fluidique intermédiaire 32 assurant la connexion fluidique du ou des échangeurs intermédiaires 7, 12, 15, 29, et la pompe à chaleur, plus précisément l'évaporateur 28. Selon le mode de réalisation dans lequel il y a plusieurs échangeurs intermédiaires 7, 12, 15, 29, ils sont agencés en parallèle les uns des autres. Le circuit fluidique intermédiaire 32 comprend avantageusement une pompe 33 destinée à mettre en circulation le fluide intermédiaire dans le circuit fluidique intermédiaire 32.

Le système comprend avantageusement des connexions fluidiques décrites ci-après

Concernant la première ligne d'alimentation 2, selon le mode de réalisation illustrée à la figure 1, elle comprend avantageusement une connexion fluidique A connectée à l'entrée du condenseur 23. La connexion fluidique A permet d'introduire dans le condenseur 23, de l'eau notamment pouvant être issue de l'eau de recyclage circulant dans la ligne de recyclage 21.

Avantageusement, la première ligne d'alimentation 2 comprend une connexion fluidique B connectée entre la sortie du condenseur 23 et l'entrée du premier générateur de vapeur intermédiaire 50.

Avantageusement, la première ligne d'alimentation 2 comprend une connexion fluidique C connectée entre la sortie du premier générateur de vapeur intermédiaire 50 à l'entrée du générateur électrique de vapeur 28.

Avantageusement, la première ligne d'alimentation 2 comprend une connexion fluidique D connectée entre la sortie du générateur électrique de vapeur 28 et l'entrée du premier échangeur thermique 5a du module d'échange thermique 5.

Avantageusement, la première ligne d'alimentation 2 comprend une connexion fluidique E connectée entre la sortie du premier échangeur thermique 5a du module d'échange thermique 5 et l'entrée du premier échangeur thermique 5a du module d'échange thermique 5 permettant une recirculation de l'eau issue de l'électro dix heures est emporté avec le fluide d'hydrogène.

Avantageusement, la première ligne d'alimentation 2 comprend une connexion fluidique F connectée entre la sortie du premier échangeur thermique 5a et l'entrée du deuxième échangeur thermique 5b.

Avantageusement, la première ligne d'alimentation 2 comprend une connexion fluidique G connectée entre la sortie de du deuxième échangeur thermique 5b et l'entrée du réchauffeur 14.

Avantageusement, la première ligne d'alimentation 2 comprend une connexion fluidique H connectée entre la sortie du réchauffeur électrique 14 et l'entrée de l'électrolyseur 1.

Concernant la première ligne d'alimentation 2, selon le mode de réalisation illustrée à la figure 1, elle comprend avantageusement, une connexion fluidique I apportant l'eau à la ligne d'alimentation 2. La connexion fluidique I permet d'alimenter deux branches parallèles en eau, dont le tronçon en dépression et la branche comprenant le premier générateur de vapeur intermédiaire 50.

Avantageusement, la première ligne d'alimentation 2 comprend une connexion fluidique I assurant la connexion fluidique J entre la connexion fluidique I et l'entrée du deuxième générateur de vapeur intermédiaire 60. La connexion fluidique J comprend le détendeur 40.

Avantageusement, la première ligne d'alimentation 2 comprend une connexion fluidique K assurant la connexion fluidique entre la sortie du deuxième générateur de vapeur 60 et l'entrée du condenseur 23.

Avantageusement la première ligne d'alimentation 2 comprend une connexion fluidique L assurant la connexion entre la sortie du condenseur 23 et l'entrée du générateur électrique 28.

Avantageusement, la première ligne d'alimentation 2 comprend une connexion fluidique M assurant la connexion fluidique entre la sortie du générateur électrique 28 et l'entrée du compresseur 41.

Avantageusement, la première ligne d'alimentation 2 comprend une connexion fluidique N assurant la connexion fluidique entre la sortie du compresseur 22 et l'entrée du premier échangeur thermique 5a.

Avantageusement, la première ligne d'alimentation 2 comprend une connexion fluidique O assurant la connexion fluidique entre la connexion fluidique I et l'entrée du premier générateur de vapeur intermédiaire 50.

Avantageusement la première ligne d'alimentation 2 comprend une connexion fluidique P assurant la connexion fluidique entre la sortie du premier générateur de vapeur intermédiaire 50 et la connexion fluidique N.

Avantageusement, la première ligne d'alimentation 2 comprend une connexion fluidique F connectée entre la sortie du premier échangeur thermique 5a et l'entrée du deuxième échangeur thermique 5b.

Avantageusement, la première ligne d'alimentation 2 comprend une connexion fluidique G connectée entre la sortie de du deuxième échangeur thermique 5b et l'entrée du réchauffeur 14.

Avantageusement, la première ligne d'alimentation 2 comprend une connexion fluidique H connectée entre la sortie du réchauffeur électrique 14 et l'entrée de l'électrolyseur 1.*

Concernant la première ligne d'évacuation 4, elle comprend avantageusement une première connexion fluidique 300 entre la sortie de l'électrolyseur 1 et l'entrée du deuxième échangeur thermique 5 b du premier module d'échange thermique 5.

Avantageusement, la première ligne d'évacuation 4 comprend une connexion fluidique 301 entre la sortie du deuxième échangeur thermique 5 b du premier module d'échange thermique 5 et l'entrée du premier échangeur thermique 5a du premier module d'échange thermique 5.

Avantageusement, la première ligne d'évacuation 4 comprend une connexion fluidique 302 entre la sortie du premier échangeur thermique 5a et l'entrée du générateur de vapeur 6.

Selon le mode de réalisation illustrée à la figure 1 :
Avantageusement, la première ligne d'évacuation 4 comprend une connexion fluidique 303 entre la sortie du générateur de vapeur 6 et l'entrée dans le premier échangeur intermédiaire 7.

Avantageusement, la première ligne d'évacuation 4 comprend une connexion fluidique 304 entre la sortie du deuxième échangeur intermédiaire 7 et l'entrée du premier aéroréfrigérant 16.

Avantageusement, la première ligne d'évacuation 4 comprend une connexion fluidique 305 entre la sortie premier aéroréfrigérant 16 et l'entrée du séparateur 17.

Avantageusement, la première ligne d'évacuation 4 comprend une connexion fluidique 306 entre la sortie du séparateur 17 et l'entrée du compresseur 18.

Avantageusement, la première ligne d'évacuation 4 comprend une connexion fluidique 307 entre la sortie du compresseur 18 et l'entrée du deuxième échangeur intermédiaire 12.

Avantageusement, la première ligne d'évacuation 4 comprend une connexion fluidique 308 entre la sortie du deuxième échangeur intermédiaire 12 et l'entrée de l'aéroréfrigérant 19.

Avantageusement, la première ligne d'évacuation 4 comprend une connexion fluidique 309 entre la sortie de l'aéroréfrigérant 19 et l'entrée du séparateur 20.

Avantageusement, la première ligne d'évacuation 4 comprend une connexion fluidique 310 entre la sortie du séparateur 20 et l'entrée du compresseur 30.

Avantageusement, la première ligne d'évacuation 4 comprend une connexion fluidique 311 entre la sortie du compresseur 30 et l'entrée du sixième échangeur intermédiaire 15.

Avantageusement, la première ligne d'évacuation 4 comprend une connexion fluidique 312 entre la sortie du sixième échangeur intermédiaire 15 et l'entrée de l'aéroréfrigérant 31.

Avantageusement, la première ligne d'évacuation 4 comprend une connexion fluidique 313 entre la sortie de l'aéroréfrigérant 31 et l'entrée du séparateur 34.

Avantageusement, la première ligne d'évacuation 4 comprend une connexion fluidique 314 assurant la sortie du dihydrogène depuis le séparateur 34.

Selon un mode de réalisation illustrée à la figure 2 :
avantageusement, la première ligne d'évacuation 4 comprend une connexion fluidique 315 entre la sortie du premier échangeur intermédiaire 6 et l'entrée du troisième échangeur intermédiaire 8 ;
avantageusement, la première ligne d'évacuation 4 comprend une connexion fluidique 316 entre la sortie du troisième échangeur intermédiaire 8 et l'entrée du deuxième échangeur intermédiaire 7.

Avantageusement, la première ligne d'évacuation 4 comprend une connexion fluidique 304 entre la sortie du deuxième échangeur intermédiaire 7 et l'entrée du premier aéroréfrigérant 16.

Avantageusement, la première ligne d'évacuation 4 comprend une connexion fluidique 305 entre la sortie premier aéroréfrigérant 16 et l'entrée du séparateur 17.

Avantageusement, la première ligne d'évacuation 4 comprend une connexion fluidique 306 entre la sortie du séparateur 17 et l'entrée du compresseur 18.

Avantageusement, la première ligne d'évacuation 4 comprend une connexion fluidique 317 entre la sortie du compresseur 18 et l'entrée du huitième échangeur intermédiaire 35.

Avantageusement, la première ligne d'évacuation 4 comprend une connexion fluidique 318 entre la sortie du huitième échangeur intermédiaire 35 et l'entrée du neuvième échangeur intermédiaire 36.

Avantageusement la première ligne d'évacuation 4 comprend une connexion fluidique 319 entre la sortie du neuvième échangeur intermédiaire 36 et l'entrée du cinquième échangeur intermédiaire 12.

Avantageusement, la première ligne d'évacuation 4 comprend une connexion fluidique 308 entre la sortie du deuxième échangeur intermédiaire 12 et l'entrée de l'aéroréfrigérant 19.

Avantageusement, la première ligne d'évacuation 4 comprend une connexion fluidique 309 entre la sortie de l'aéroréfrigérant 19 et l'entrée du séparateur 20.

Avantageusement, la première ligne d'évacuation 4 comprend une connexion fluidique 310 entre la sortie du séparateur 20 et l'entrée du compresseur 30.

Avantageusement, la première ligne d'évacuation 4 comprend une connexion fluidique 320 entre la sortie du compresseur 22 et l'entrée du dixième échangeur intermédiaire 37.

Avantageusement la première ligne d'évacuation 4 comprend une connexion fluidique 321 entre la sortie du dixième échangeur intermédiaire 37 et l'entrée du onzième échangeur intermédiaire 38.

Avantageusement la première ligne d'évacuation 4 comprend une connexion fluidique 322 entre la sortie du onzième échangeur intermédiaire 38 et l'entrée du sixième échangeur intermédiaire 15.

Avantageusement, la première ligne d'évacuation 4 comprend une connexion fluidique 312 entre la sortie du sixième échangeur intermédiaire 15 et l'entrée de l'aéroréfrigérant 31.

Avantageusement, la première ligne d'évacuation 4 comprend une connexion fluidique 313 entre la sortie de l'aéroréfrigérant 31 et l'entrée du séparateur 34.

Avantageusement, la première ligne d'évacuation 4 comprend une connexion fluidique 314 assurant la sortie du dihydrogène depuis le séparateur 34.

Concernant la deuxième ligne d'évacuation 3 de dioxygène, elle comprend avantageusement une connexion fluidique 100 entre la sortie de l'électrolyseur 1 et l'entrée du deuxième échangeur thermique 11 b du deuxième module d'échange thermique 11.

Avantageusement, la deuxième ligne d'évacuation 3 comprend une connexion fluidique 101 entre la sortie du deuxième échangeur thermique 11b et l'entrée du premier échangeur thermique 11a du deuxième module d'échange thermique 11.

Avantageusement, la deuxième ligne d'évacuation 3 comprend une connexion fluidique 102 entre la sortie du premier échangeur thermique 11a et l'entrée de l'échangeur thermique 9.

Selon le mode de réalisation illustré à la figure 1, avantageusement, la deuxième ligne d'évacuation 3 comprend une connexion fluidique 103 entre la sortie de l'échangeur thermique 9 et l'entrée du septième échangeur intermédiaire 29. Avantageusement, la deuxième ligne d'évacuation 3 comprend une connexion fluidique 104 entre la sortie du septième échangeur intermédiaire 29 et l'extérieur.

Selon le mode de réalisation illustré à la figure 2, avantageusement, la deuxième ligne d'évacuation 3 comprend une connexion fluidique 105 entre la sortie de l'échangeur thermique 9 et l'entrée du douzième échangeur intermédiaire 39. Avantageusement, la deuxième ligne d'évacuation 3 comprend une connexion fluidique 106 entre la sortie du douzième échangeur intermédiaire 39 et l'entrée du septième échangeur intermédiaire 29. Avantageusement, la deuxième ligne d'évacuation 3 comprend une connexion fluidique 104 entre la sortie du septième échangeur intermédiaire 29 et l'extérieur.

Concernant la deuxième ligne d'alimentation 4 en air, elle comprend selon une possibilité non représentée une connexion fluidique 110 entre la sortie d'un échangeur thermique remplaçant l'aéroréfrigérant 16 et l'entrée du compresseur 30.

Avantageusement, la deuxième ligne d'alimentation 4 comprend une connexion fluidique 111 entre la sortie du compresseur 30 et l'entrée du premier échangeur thermique 11a du deuxième module d'échange thermique 11.

Avantageusement, la deuxième ligne d'alimentation 4 comprend une connexion fluidique 112 entre la sortie du premier échangeur thermique 11a et l'entrée du deuxième échangeur thermique 11 b du deuxième module d'échange thermique 11.

Avantageusement, la deuxième ligne d'alimentation 4 comprend une connexion fluidique 113 entre la sortie du deuxième échangeur thermique 11 b et l'entrée du réchauffeur électrique 13.

Avantageusement, la deuxième ligne d'alimentation 4 comprend une connexion fluidique 114 entre la sortie du réchauffeur électrique 13 et l'entrée de l'électrolyseur 1.

En fonctionnement, selon le premier mode de réalisation illustré à la figure 1, l'eau liquide arrive dans la première ligne d'alimentation 2 en vapeur d'eau, plus précisément dans la première portion par la connexion fluidique A. La connexion fluidique A est avantageusement connectée à l'entrée du condenseur 23. L'eau liquide pénètre dans le condenseur 23. La température de l'eau augmente par transfert des calories du fluide caloporteur de la pompe à chaleur au profit de l'eau liquide. Dans le condenseur 23, le fluide caloporteur transmet ses calories à l'eau ce qui assure la condensation du fluide caloporteur dans le condenseur 23. L'eau liquide réchauffée sort du condenseur 23 par la connexion fluidique B à une température avantageusement proche de la température d'évaporation, c'est à dire à +/-5°C et, pénètre préférentiellement, directement dans le premier générateur de vapeur intermédiaire 50. L'eau liquide est transformée en vapeur par le générateur intermédiaire de vapeur 50 qui récupère l'énergie thermique issue du dihydrogène produit par l'électrolyseur 1 au moins par le premier échangeur intermédiaire 6. En fonction de l'énergie transmise au premier générateur intermédiaire 50, l'eau ressort de celui-ci et pénètre préférentiellement directement par la connexion fluidique C dans le générateur électrique de vapeur 28.

L'eau liquide introduite par la connexion A peut-être de l'eau d'un réseau d'eau ou de l'eau recyclée issue des séparateurs du système ou bien un mélange des deux.

Selon l'invention, l'énergie devant être fournie par le générateur électrique de vapeur 28 pour la transformation de l'eau liquide en vapeur d'eau est réduite grâce au premier module de récupération d'énergie thermique et avantageusement au troisième module de récupération d'énergie thermique en particulier au condenseur 23 de la pompe à chaleur.

La vapeur d'eau sort du générateur électrique de vapeur 28 par la connexion fluidique D et pénètre, préférentiellement directement, dans le premier module d'échange thermique 5, préférentiellement dans le premier échangeur thermique 5a. La vapeur d'eau est chauffée dans le premier échangeur thermique 5a par récupération des calories du dihydrogène circulant dans le premier échangeur thermique 5a. La vapeur d'eau surchauffée sort du premier échangeur thermique 5a par la connexion fluidique F et pénètre, préférentiellement directement, dans le deuxième échangeur thermique 5 b. La vapeur d'eau est à nouveau chauffée dans le deuxième échangeur thermique 5 b par récupération des calories du dihydrogène circulant dans le deuxième échangeur thermique 5 b. La vapeur d'eau surchauffée sort du deuxième échangeur thermique 5 b par la connexion fluidique G et pénètre, préférentiellement directement, dans le réchauffeur électrique 14, si besoin. Le réchauffeur électrique 14 assure la dernière montée en température éventuellement nécessaire pour que la vapeur d'eau atteigne une température cible prédéfinie pour entrer dans l'électrolyseur 1. La vapeur d'eau sort du réchauffeur électrique 14 par la connexion fluidique H et pénètre, préférentiellement directement, dans l'électrolyseur 1.

En fonctionnement, selon le deuxième mode de réalisation illustré à la figure 2, l'eau liquide arrive dans la première ligne d'alimentation 2 en vapeur d'eau, plus précisément dans la première portion par la connexion fluidique. L'eau liquide arrive par la connexion fluidique I et alimente les deux branches de la première ligne d'alimentation 2.

L'eau circulant dans la connexion fluidique I pénètre, préférentiellement directement, dans la connexion fluidique J et donc dans le détendeur 40. L'eau liquide et mise en dépression en sortie du détendeur 40. Le liquide en dépression pénètre par la connexion fluidique J dans le deuxième générateur de vapeur intermédiaire 60. Dans le deuxième générateur de vapeur intermédiaire 60, l'eau en dépression est chauffée grâce à l'apport de calories récupérées sur la première ligne d'évacuation 3 de du dihydrogène et notamment par le troisième échangeur intermédiaire 8, éventuellement le neuvième échangeur intermédiaire 36, le onzième échangeur intermédiaire 38, le douzième échangeur intermédiaire 39. L'eau liquide surchauffée sort du deuxième générateur de vapeur intermédiaire 60 par la connexion fluidique K et pénètre, préférentiellement directement, dans le condenseur 23. Dans le condenseur 23, l'eau liquide surchauffée en dépression est chauffée par le condenseur 23 de la pompe à chaleur. L'eau liquide surchauffée ressort du condenseur 23 par la connexion fluidique L et pénètre préférentiellement directement dans le générateur de vapeur électrique 28. Si le générateur de vapeur électrique 28 est en fonctionnement, car l'eau liquide réchauffée nécessite un apport supplémentaire de chaleur, l'eau ressort du générateur de vapeur électrique 28 par la connexion fluidique M et pénètre, préférentiellement directement, dans le compresseur 41. Le compresseur 41 permet de remonter la pression de l'eau circulant dans le tronçon en dépression à 1 pression atmosphérique. La vapeur d'eau à pression atmosphérique sort du compresseur 41 par la connexion fluidique N et pénètre préférentiellement directement dans le 1er échangeur thermique 5a du premier module d'échange thermique 5.

Au niveau de l'autre branche, l'eau circulant dans la connexion fluidique I pénètre, préférentiellement directement, dans la connexion fluidique O et pénètre, préférentiellement directement dans le premier générateur de vapeur intermédiaire 50. Dans le premier générateur de vapeur intermédiaire 50, l'eau est chauffée à pression atmosphérique par les calories récupérées sur la première ligne d'évacuation 3 du dihydrogène et notamment par le premier échangeur intermédiaire 6, et éventuellement par le huitième échangeur intermédiaire 35, le dixième échangeur intermédiaire 37, le quatrième échangeur intermédiaire 9. L'eau est avantageusement transformée en vapeur dans le premier générateur de vapeur intermédiaire 50 et ressort de celui-ci par la connexion fluidique P pénétrant préférentiellement directement dans la connexion fluidique N.

La vapeur d'eau est chauffée dans le premier échangeur thermique 5a par récupération des calories du dihydrogène circulant dans le premier échangeur thermique 5a. La vapeur d'eau surchauffée sort du premier échangeur thermique 5a par la connexion fluidique F et pénètre, préférentiellement directement, dans le deuxième échangeur thermique 5 b. La vapeur d'eau est à nouveau chauffée dans le deuxième échangeur thermique 5 b par récupération des calories du dihydrogène circulant dans le deuxième échangeur thermique 5 b. La vapeur d'eau surchauffée sort du deuxième échangeur thermique 5 b par la connexion fluidique G et pénètre, préférentiellement directement, dans le réchauffeur électrique 14, si besoin. Le réchauffeur électrique 14 assure la dernière montée en température éventuellement nécessaire pour que la vapeur d'eau atteigne une température cible prédéfinie pour entrer dans l'électrolyseur 1. La vapeur d'eau sort du réchauffeur électrique 14 par la connexion fluidique H et pénètre, préférentiellement directement, dans l'électrolyseur 1.

Une ou plusieurs pompes peuvent être placées sur les différentes connexions fluidiques pour mettre en mouvement l'eau liquide et assurer avantageusement une mise sous pression de la première ligne d'alimentation 2.

L'électrolyseur 1 est alimenté en courant électrique selon une tension et une intensité prédéfinie permettant d'assurer l'électrolyse et donc la production de dihydrogène et dioxygène.

Le dihydrogène sort de l'électrolyseur 1 par la première ligne d'évacuation, par la connexion fluidique 300 et pénètre, préférentiellement directement, dans le premier module d'échange thermique 5, préférentiellement le deuxième échangeur thermique 5 b. Le dihydrogène sort de l'électrolyseur à l'état gazeux chaud, il est nécessaire d'abaisser sa température pour l'utiliser et/ou le stocker. Les calories du dihydrogène sont donc récupérées par la première ligne d'alimentation et plus précisément la vapeur y circulant. Dans le deuxième échangeur thermique 5 b, le dihydrogène voit sa température baissée par transfert de calories au profit de la vapeur d'eau circulant dans le deuxième échangeur thermique 5 b. Le dihydrogène refroidi sort du deuxième échangeur thermique 5 b par la connexion fluidique 301 et pénètre, préférentiellement directement, dans le premier échangeur thermique 5a. Dans le premier échangeur thermique 5a, le dihydrogène voit à nouveau sa température baissée par transfert de calories au profit de la vapeur d'eau circulant dans le premier échangeur thermique 5a. Le dihydrogène refroidi sort du premier échangeur thermique 5a par la connexion fluidique 302 et pénètre, préférentiellement directement, dans le premier échangeur intermédiaire 6. En passant dans le premier échangeur intermédiaire 6, le dihydrogène est refroidi, car il cède des calories au fluide intermédiaire circulant dans le premier circuit fluidique intermédiaire.

Selon le premier mode de réalisation illustré à la figure 1, le dihydrogène sort du premier échangeur intermédiaire 6 par la connexion fluidique 303 et pénètre, préférentiellement directement, dans le deuxième échangeur intermédiaire 7. Dans ce deuxième échangeur intermédiaire 7, le dihydrogène est refroidi, car il cède des calories au fluide intermédiaire circulant dans le circuit fluidique intermédiaire 32. Le dihydrogène sort du deuxième échangeur intermédiaire 7 par la connexion fluidique 304 et pénètre, préférentiellement directement, dans le premier aéroréfrigérant 16. Le dihydrogène sort du premier aéroréfrigérant 16 par la connexion fluidique 305 et pénètre, préférentiellement directement, dans le séparateur de liquide/gaz 17 assurant la condensation du dihydrogène. Le dihydrogène sort du séparateur de liquide/gaz 17 par la connexion fluidique 306 et subit si besoin une nouvelle compression en vue d'une nouvelle condensation. Dans ce cas, le dihydrogène sort du séparateur de liquide/gaz 17 par la connexion fluidique 306 et pénètre, préférentiellement directement, dans le compresseur 18 d'où il sort par la connexion fluidique 307 et pénètre, préférentiellement directement, dans le cinquième échangeur intermédiaire 12. En passant dans le cinquième échangeur intermédiaire 12, le dihydrogène est refroidi, car il cède des calories au fluide intermédiaire circulant dans le circuit fluidique intermédiaire 32. Le dihydrogène sort du cinquième échangeur intermédiaire 12 par la connexion fluidique 308 et pénètre, préférentiellement directement, dans le deuxième aéroréfrigérant 19 assurant le refroidissement du dihydrogène. Le dihydrogène sort de l'aéroréfrigérant 19 par la connexion fluidique 309 et pénètre, préférentiellement directement, dans le séparateur de liquide/gaz 20 assurant la condensation du dihydrogène. Le dihydrogène condensé sort du séparateur de liquide/gaz 20 par la connexion fluidique 310 et subit si besoin une nouvelle compression en vue d'une nouvelle condensation. Dans ce cas, le dihydrogène sort du séparateur de liquide/gaz 20 par la connexion fluidique 310 et pénètre, préférentiellement directement, dans le compresseur 30 d'où il sort par la connexion fluidique 311 et pénètre, préférentiellement directement, dans le sixième échangeur intermédiaire 15. En passant dans le sixième échangeur intermédiaire 15, le dihydrogène est refroidi, car il cède des calories au fluide intermédiaire circulant dans le circuit fluidique intermédiaire 32. Le dihydrogène sort du sixième échangeur intermédiaire 15 par la connexion fluidique 312 et pénètre, préférentiellement directement, dans le deuxième aéroréfrigérant 31 assurant le refroidissement du dihydrogène. Le dihydrogène sort de l'aéroréfrigérant 31 par la connexion fluidique 313 et pénètre, préférentiellement directement, dans le séparateur de liquide/gaz 34 assurant la condensation du dihydrogène. Le dihydrogène condensé sort du séparateur de liquide/gaz 34 par la connexion fluidique 314 et peut être utilisé ou stocké. L'eau liquide condensée récupérée du séparateur de liquide/gaz 17, 20, 34 peut être recyclée dans la première ligne d'alimentation 2 en vapeur d'eau par connexion fluidique avec la ligne de recyclage d'eau 21.

Selon le deuxième mode de réalisation illustré à la figure 2, le dihydrogène sort du premier échangeur intermédiaire 6 par la connexion fluidique 315 et pénètre, préférentiellement directement dans le troisième échangeur intermédiaire 316. Le dihydrogène sort du troisième échangeur intermédiaire 316 et pénètre, préférentiellement directement dans le deuxième échangeur intermédiaire7. Le dihydrogène sort du deuxième échangeur intermédiaire 7 par la connexion fluidique 304 et pénètre préférentiellement directement dans l'aéro réfrigérant 16. Le dihydrogène sort du premier aéroréfrigérant 16 par la connexion fluidique 305 et pénètre, préférentiellement directement, dans le séparateur de liquide/gaz 17 assurant la condensation du dihydrogène. Le dihydrogène sort du séparateur de liquide/gaz 17 par la connexion fluidique 306 et subit si besoin une nouvelle compression en vue d'une nouvelle condensation. Dans ce cas, le dihydrogène sort du séparateur de liquide/gaz 17 par la connexion fluidique 306 et pénètre, préférentiellement directement, dans le compresseur 18 d'où il sort par la connexion fluidique 317 et pénètre, préférentiellement directement dans le huitième échangeur intermédiaire 35. Le dihydrogène sort du huitième échangeur intermédiaire 35 par la connexion fluidique 318 et pénètre, préférentiellement directement, dans le neuvième échangeur intermédiaire 36. Le dihydrogène sort du neuvième échangeur intermédiaire 36 par la connexion fluidique 319 et pénètre préférentiellement directement dans le cinquième échangeur intermédiaire 12. En passant dans le cinquième échangeur intermédiaire 12, le dihydrogène est refroidi, car il cède des calories au fluide intermédiaire circulant dans le circuit fluidique intermédiaire 32. Le dihydrogène sort du cinquième échangeur intermédiaire 12 par la connexion fluidique 308 et pénètre, préférentiellement directement, dans le deuxième aéroréfrigérant 19 assurant le refroidissement du dihydrogène. Le dihydrogène sort de l'aéroréfrigérant 19 par la connexion fluidique 309 et pénètre, préférentiellement directement, dans le séparateur de liquide/gaz 20 assurant la condensation du dihydrogène. Le dihydrogène condensé sort du séparateur de liquide/gaz 20 par la connexion fluidique 310 et subit si besoin une nouvelle compression en vue d'une nouvelle condensation. Dans ce cas, le dihydrogène sort du séparateur de liquide/gaz 20 par la connexion fluidique 310 et pénètre, préférentiellement directement, dans le compresseur 30 d'où il sort par la connexion fluidique 320. En passant dans le cinquième échangeur intermédiaire 12, le dihydrogène est refroidi, car il cède des calories au fluide intermédiaire circulant dans le circuit fluidique intermédiaire 32. Le dihydrogène sort du cinquième échangeur intermédiaire 12 par la connexion fluidique 308 et pénètre, préférentiellement directement, dans le deuxième aéroréfrigérant 19 assurant le refroidissement du dihydrogène. Le dihydrogène sort de l'aéroréfrigérant 19 par la connexion fluidique 309 et pénètre, préférentiellement directement, dans le séparateur de liquide/gaz 20 assurant la condensation du dihydrogène. Le dihydrogène condensé sort du séparateur de liquide/gaz 20 par la connexion fluidique 310 et subit si besoin une nouvelle compression en vue d'une nouvelle condensation. Dans ce cas, le dihydrogène sort du séparateur de liquide/gaz 20 par la connexion fluidique 310 et pénètre, préférentiellement directement, dans le compresseur 30 d'où il sort par la connexion fluidique 320. Le dihydrogène pénètre préférentiellement directement dans le dixième échangeur intermédiaire 37. Le dihydrogène sort du dixième échangeur intermédiaire 37 par la connexion fluidique 321 et pénètre, préférentiellement directement, dans le onzième échangeur intermédiaire 38. Le dihydrogène sort du onzième échangeur intermédiaire 38 par la connexion fluidique 322 et pénètre préférentiellement directement dans le sixième échangeur intermédiaire 15. Le dihydrogène sort du sixième échangeur intermédiaire 15 par la connexion fluidique 312 et pénètre, préférentiellement directement, dans le deuxième aéroréfrigérant 31 assurant le refroidissement du dihydrogène. Le dihydrogène sort de l'aéroréfrigérant 31 par la connexion fluidique 313 et pénètre, préférentiellement directement, dans le séparateur de liquide/gaz 34 assurant la condensation du dihydrogène. Le dihydrogène condensé sort du séparateur de liquide/gaz 34 par la connexion fluidique 314 et peut être utilisé ou stocké.

Le dioxygène produit par l'électrolyseur sort par la deuxième ligne d'évacuation 3, par la connexion fluidique 100 et pénètre, préférentiellement directement, dans le deuxième module d'échange thermique 11, préférentiellement le deuxième échangeur thermique 11 b. Le dioxygène sort de l'électrolyseur à l'état gazeux chaud, il est nécessaire d'abaisser sa température pour le rejet dans l'air. Les calories du dioxygène sont donc récupérées avantageusement par la deuxième ligne d'alimentation 10 et plus précisément l'air y circulant. Dans le deuxième échangeur thermique 11 b, le dioxygène voit sa température baissée par transfert de calories au profit de l'air circulant dans le deuxième échangeur thermique 11 b. Le dioxygène refroidi sort du deuxième échangeur thermique 11 b par la connexion fluidique 101 et pénètre, préférentiellement directement, dans le premier échangeur thermique 11a. Dans le premier échangeur thermique 11a, le dioxygène voit à nouveau sa température baissée par transfert de calories au profit de l'air circulant dans le premier échangeur thermique 11a. Le dioxygène refroidi sort du premier échangeur thermique 11a par la connexion fluidique 102 et avantageusement pénètre, préférentiellement directement, dans le quatrième échangeur intermédiaire 9 du module de récupération. En passant dans le quatrième échangeur intermédiaire 9, le dioxygène voit à nouveau sa température baissée par transfert de calories au profit de l'eau liquide circulant dans l'échangeur intermédiaire 9.

Selon un premier mode de réalisation illustrée à la figure 1, l'air sort de l'échangeur intermédiaire 9 par la connexion fluidique 103 et pénètre, préférentiellement directement dans un quatrième échangeur intermédiaire 29. Dans le septième échangeur intermédiaire 29, le dihydrogène est refroidi, car il cède des calories au fluide intermédiaire circulant dans le circuit fluidique intermédiaire 32. Le dihydrogène sort du septième échangeur intermédiaire 29 par la connexion fluidique 104 et est rejeté dans l'air.

Selon un deuxième mode de réalisation illustrée à la figure 2, l'air sort du quatrième échangeur intermédiaire 9 par la connexion fluidique 105 et pénètre préférentiellement directement dans le douzième échangeur intermédiaire 39. L'air sort du deuxième échangeur intermédiaire 39 par la connexion fluidique 106 et pénètre, préférentiellement directement dans le septième échangeur intermédiaire 29. Le dihydrogène sort du septième échangeur intermédiaire 29 par la connexion fluidique 104 et est rejeté dans l'air.

Selon une possibilité, de l'air est fourni à l'électrolyseur 1. L'air arrive par la deuxième ligne d'alimentation 10. Avantageusement, l'air traverse le deuxième échangeur thermique remplaçant l'aéroréfrigérant 16 et récupère des calories du dihydrogène circulant dans l'échangeur thermique. Ce premier échange thermique assure un premier chauffage de l'air. L'air sort de l'échangeur thermique par la connexion fluidique 110 et pénètre, préférentiellement directement, dans le compresseur 30. Selon la possibilité illustrée, l'air est comprimé par le compresseur 30 et sa température augmente. L'air pénètre dans le compresseur 30 par la connexion fluidique 110. L'air sort du compresseur 30 par la connexion fluidique 111 et pénètre, préférentiellement directement, dans le deuxième module d'échange thermique 11, préférentiellement dans le premier échangeur thermique 11a. L'air est chauffé dans le premier échangeur thermique 11a par récupération des calories du dioxygène circulant dans le premier échangeur thermique 11a. L'air surchauffé sort du premier échangeur thermique 11a par la connexion fluidique 112 et pénètre, préférentiellement directement, dans le deuxième échangeur thermique 11 b. L'air est à nouveau chauffé dans le deuxième échangeur thermique 11 b par récupération des calories du dioxygène circulant dans le deuxième échangeur thermique 11 b. L'air surchauffé sort du deuxième échangeur thermique 11 b par la connexion fluidique 113 et pénètre, préférentiellement directement, dans le réchauffeur électrique 13 si besoin. Le réchauffeur électrique 13 assure la dernière montée en température éventuellement nécessaire pour que l'air atteigne une température cible prédéfinie pour entrer dans l'électrolyseur 1. L'air sort du réchauffeur électrique 13 par la connexion fluidique 114 et pénètre, préférentiellement directement, dans l'électrolyseur 1.

### LISTE DES REFERENCES

- 1.: Électrolyseur
- 2.: Ligne d'alimentation en vapeur d'eau
- 3.: Ligne d'évacuation de dioxygène
- 4.: Ligne d'évacuation de dihydrogène
- 5a.: Premier échangeur thermique du premier module d'échange thermique
- 5b.: Deuxième échangeur thermique du premier module d'échange thermique
- 6.: Premier Échangeur intermédiaire
- 7.: Deuxième échangeur intermédiaire
- 8.: Troisième Échangeur intermédiaire
- 9.: Quatrième Échangeur intermédiaire
- 10.: Ligne d'alimentation en air
- 11a.: Premier échangeur thermique du deuxième module d'échange thermique
- 11b.: Deuxième échangeur thermique du deuxième module d'échange thermique
- 12.: Cinquième échangeur intermédiaire
- 13.: Réchauffeur électrique
- 14.: Réchauffeur électrique
- 15.: Sixième échangeur intermédiaire
- 16.: Aéroréfrigérant
- 17.: Séparateur liquide/Gaz
- 18.: Compresseur
- 19.: Aéroréfrigérant
- 20.: Séparateur liquide/Gaz
- 21.: Ligne de recyclage d'eau
- 22.: Compresseur
- 23.: Condenseur
- 24.: Détendeur
- 25.: Évaporateur
- 26.: Compresseur
- 27.: Circuit fluidique
- 28.: Générateur électrique de vapeur
- 29.: septième échangeur thermique
- 30.: Compresseur
- 31.: Aéroréfrigérant
- 32.: troisième Circuit fluidique intermédiaire
- 33.: Pompe
- 34.: Séparateur
- 35.: Huitième Échangeur intermédiaire
- 36.: Neuvième Échangeur intermédiaire
- 37.: Dixième Échangeur intermédiaire
- 38.: Onzième Échangeur intermédiaire
- 39.: Douzième Échangeur intermédiaire
- 40.: Détendeur
- 41.: Compresseur
- 50.: Premier générateur de vapeur basse pression
- 60.: Deuxième générateur de vapeur basse température

- A.: Connexion fluidique entrant dans le condenseur 23
- B.: Connexion fluidique entre le condenseur 23 et le premier générateur intermédiaire 50
- C.: Connexion fluidique entre le premier générateur intermédiaire 50 et le générateur électrique de vapeur 28
- D.: Connexion fluidique entre le générateur électrique de vapeur 28 et le premier échangeur thermique 5a
- E.: Connexion fluidique entre le premier échangeur thermique 5a et la connexion fluidique D.
- F.: Connexion fluidique entre le premier échangeur thermique 5a et le deuxième échangeur thermique 5 b
- G.: Connexion fluidique entre le deuxième échangeur thermique 5 b et le réchauffeur 14.
- H.: Connexion fluidique entre le réchauffeur 14 et l'électrolyseur 1
- I.: Connexion fluidique entrant dans la ligne d'alimentation en vapeur 1
- J.: Connexion fluidique entre la connexion fluidique I et le deuxième générateur intermédiaire 60 comportant préférentiellement le détendeur 40.
- K.: Connexion fluidique entre le deuxième générateur intermédiaire 60 et le condenseur 23
- L.: Connexion fluidique entre le condenseur 23 et le générateur électrique 28
- M.: Connexion fluidique entre le générateur électrique 28 et compresseur 41
- N.: Connexion fluidique entre compresseur 41et le premier échangeur 5a du premier

- O.: module d'échange thermique 5 Connexion fluidique entre la connexion fluidique I et le premier générateur intermédiaire 50
- P.: Connexion fluidique entre le premier générateur intermédiaire 50 et la connexion fluidique N
- 100.: Connexion fluidique entre l'électrolyseur 1 et le deuxième échangeur thermique 11b
- 101.: Connexion fluidique entre le deuxième échangeur thermique 11 b et le premier échangeur thermique 11a
- 102.: Connexion fluidique entre le premier échangeur thermique 11a et l'échangeur intermédiaire 9
- 103.: Connexion fluidique entre l'échangeur intermédiaire 9 et l'échangeur intermédiaire 29
- 104.: Connexion fluidique de sortie de l'échangeur thermique 29
- 105.: Connexion fluidique entre l'échangeur intermédiaire 9 et l'échangeur intermédiaire 39
- 106.: Connexion fluidique entre l'échangeur intermédiaire 29 et l'échangeur intermédiaire 39
- 110.: Connexion fluidique d'entrée dans le compresseur 30
- 111.: Connexion fluidique entre le compresseur 30 et le premier échangeur thermique 11a
- 112.: Connexion fluidique entre le premier échangeur thermique 11a et le deuxième échangeur thermique 11b
- 113.: Connexion fluidique entre le deuxième échangeur thermique 11 b et le réchauffeur 13
- 114.: Connexion fluidique entre le réchauffeur 13 et l'électrolyseur 1
- 200.: Connexion fluidique entre le compresseur 26 et le condenseur 23
- 201.: Connexion fluidique entre le condenseur 23 et le détendeur 24
- 202.: Connexion fluidique entre le détendeur 24 et l'évaporateur 25
- 203.: Connexion fluidique entre l'évaporateur 25 et le compresseur 26
- 300.: Connexion fluidique entre l'électrolyseur 1 et le deuxième échangeur thermique 5 b
- 301.: Connexion fluidique entre le deuxième échangeur thermique 5 b et le premier échangeur thermique 5a

- 302.: Connexion fluidique entre le premier échangeur thermique 5a et le premier échangeur intermédiaire 6
- 303.: Connexion fluidique entre le premier échangeur intermédiaire 6 et le deuxième échangeur thermique intermédiaire 7
- 304.: Connexion fluidique entre le deuxième échangeur thermique intermédiaire 7 et l'aéroréfrigérant 16
- 305.: Connexion fluidique entre l'aéroréfrigérant 16 et le séparateur liquide/ gaz 17
- 306.: Connexion fluidique entre le séparateur liquide/ gaz 17 et le compresseur 18
- 307.: Connexion fluidique entre le compresseur 18 et le cinquième échangeur intermédiaire 12
- 308.: Connexion fluidique entre le cinquième échangeur intermédiaire 12 et l'aéroréfrigérant 19
- 309.: Connexion fluidique entre l'aéroréfrigérant 19 et le séparateur liquide/ gaz 20
- 310.: Connexion fluidique entre le séparateur liquide/ gaz 20 et le compresseur 22
- 311.: Connexion fluidique entre le compresseur 22 et le sixième échangeur intermédiaire 15
- 312.: Connexion fluidique entre le sixième échangeur intermédiaire 15 et l'aéroréfrigérant 31
- 313.: Connexion fluidique entre l'aéroréfrigérant 31 et le séparateur liquide/gaz 34
- 314.: Connexion fluidique de sortie du dihydrogène du séparateur liquide/gaz 34
- 315.: Connexion fluidique entre le premier échangeur intermédiaire 6 et le troisième échangeur thermique intermédiaire 8
- 316.: Connexion fluidique entre le troisième échangeur thermique intermédiaire 8 et le deuxième échangeur thermique intermédiaire 7
- 317.: Connexion fluidique entre le compresseur 18 et le huitième échangeur intermédiaire 35
- 318.: Connexion fluidique entre le huitième échangeur intermédiaire 35 et le neuvième échangeur intermédiaire 36
- 319.: Connexion fluidique entre le neuvième échangeur intermédiaire 36 et le cinquième échangeur intermédiaire 12
- 320.: Connexion fluidique entre le compresseur 22 et le dixième échangeur intermédiaire 37
- 321.: Connexion fluidique entre le dixième échangeur intermédiaire 37et le onzième échangeur intermédiaire 38
- 322.: Connexion fluidique entre le onzième échangeur intermédiaire 38 et le sixième échangeur intermédiaire 15
- 400.: Connexion fluidique entre la sortie du deuxième échangeur intermédiaire 7 et l'évaporateur 25
- 401.: Connexion fluidique entre l'évaporateur 25 et l'entrée du deuxième échangeur intermédiaire 7
- 402.: Connexion fluidique entre la sortie du cinquième échangeur intermédiaire 12 et l'évaporateur 25
- 403.: Connexion fluidique entre l'évaporateur 25 et l'entrée du cinquième échangeur intermédiaire 12
- 404.: Connexion fluidique entre la sortie du sixième échangeur intermédiaire 15 et l'évaporateur 25
- 405.: Connexion fluidique entre l'évaporateur 25 et l'entrée du sixième échangeur intermédiaire 15
- 406.: Connexion fluidique entre la sortie du septième échangeur intermédiaire 29 et l'évaporateur 25
- 407.: Connexion fluidique entre l'évaporateur 25 et l'entrée du septième échangeur intermédiaire 29
- 410.: Branche principale de l'évaporateur 25 vers l'échangeur intermédiaire
- 411.: Branche principale de l'échangeur intermédiaire vers l'évaporateur 25
- 500.: Connexion fluidique entre la sortie du premier échangeur intermédiaire 6 et le premier générateur intermédiaire 50
- 501.: Connexion fluidique entre le premier générateur intermédiaire 50 et l'entrée du premier échangeur intermédiaire 6
- 502.: Connexion fluidique entre la sortie du quatrième échangeur intermédiaire 9 et le premier générateur intermédiaire 50
- 503.: Connexion fluidique entre le premier générateur intermédiaire 50 et l'entrée du quatrième échangeur intermédiaire 9
- 504.: Connexion fluidique entre la sortie du huitième échangeur intermédiaire 35 et le premier générateur intermédiaire 50
- 505.: Connexion fluidique entre le premier générateur intermédiaire 50 et l'entrée du huitième échangeur intermédiaire 35
- 506.: Connexion fluidique entre la sortie du dixième échangeur intermédiaire 37 et le premier générateur intermédiaire 50

- 507.: Connexion fluidique entre le premier générateur intermédiaire 50 et l'entrée du dixième échangeur intermédiaire 37
- 510.: Branche principale du premier générateur intermédiaire 50 vers l'échangeur intermédiaire
- 511.: Branche principale de l'échangeur intermédiaire vers le premier générateur intermédiaire 50
- 600.: Connexion fluidique entre la sortie du troisième échangeur intermédiaire 8 et le deuxième générateur intermédiaire 60
- 601.: Connexion fluidique entre le deuxième générateur intermédiaire 60 et l'entrée du troisième échangeur intermédiaire 8
- 602.: Connexion fluidique entre la sortie du douzième échangeur intermédiaire 39 et le deuxième générateur intermédiaire 60
- 603.: Connexion fluidique entre le deuxième générateur intermédiaire 60 et l'entrée du douzième échangeur intermédiaire 39
- 604.: Connexion fluidique entre la sortie du neuvième échangeur intermédiaire 36 et le deuxième générateur intermédiaire 60
- 605.: Connexion fluidique entre le deuxième générateur intermédiaire 60 et l'entrée du neuvième échangeur intermédiaire 36
- 606.: Connexion fluidique entre la sortie du onzième échangeur intermédiaire 38 et le deuxième générateur intermédiaire 60
- 607.: Connexion fluidique entre le deuxième générateur intermédiaire 60et l'entrée du onzième échangeur intermédiaire 38
- 610.: Branche principale du deuxième générateur intermédiaire 60 vers l'échangeur intermédiaire
- 611.: Branche principale de l'échangeur intermédiaire vers le deuxième générateur intermédiaire 60

## Revendications

1. **Système** comprenant
- un électrolyseur (1) à haute température (EHT),
- une première ligne d'alimentation (2) de l'électrolyseur configurée pour alimenter l'électrolyseur (1) en vapeur d'eau,
- une première ligne d'évacuation (4) de l'électrolyseur configurée pour évacuer depuis l'électrolyseur (1) du dihydrogène,
- une deuxième ligne d'évacuation (3) de l'électrolyseur configurée pour évacuer depuis l'électrolyseur (1) du dioxygène,
- un premier module d'échange thermique (5) configuré pour assurer un échange thermique entre la première ligne d'alimentation (2) en vapeur d'eau et la première ligne d'évacuation (4) du dihydrogène,
**caractérisé en ce que** le système comprend
- un premier module de récupération de l'énergie thermique du dihydrogène en sortie du premier module d'échange thermique (5) au profit de la première ligne d'alimentation (2) en vapeur d'eau, le module de récupération comprenant
∘ un premier échangeur intermédiaire (6) agencé sur la première ligne d'évacuation (4) en aval du premier module d'échange thermique (5) et configuré pour transférer l'énergie thermique du dihydrogène à un fluide intermédiaire, et
o un premier générateur de vapeur intermédiaire (50) agencé sur la première ligne d'alimentation (2) en vapeur configuré pour transférer l'énergie thermique du fluide intermédiaire à l'eau liquide,
o un premier circuit fluidique intermédiaire configuré pour recevoir un fluide intermédiaire et assurer la connexion fluidique entre le premier échangeur intermédiaire (6) et le premier générateur de vapeur intermédiaire (50),
- un troisième module de récupération de l'énergie thermique du dihydrogène en sortie du premier module d'échange thermique (5) au profit de la première ligne d'alimentation (2) en vapeur d'eau, le troisième module de récupération comprenant une pompe à chaleur et un circuit intermédiaire, le circuit intermédiaire comprenant :
o un deuxième échangeur intermédiaire (7) agencé sur la première ligne d'évacuation (2) en aval du premier module d'échange thermique (5) et configuré pour transférer l'énergie thermique du dihydrogène à un fluide intermédiaire, et
∘ un troisième circuit fluidique intermédiaire (32) configuré pour recevoir un fluide intermédiaire et assurer la connexion fluidique entre le deuxième échangeur intermédiaire (7) et la pompe à chaleur, la pompe à chaleur comprenant :
∘ un circuit fluidique (27) configuré pour recevoir un fluide caloporteur,
∘ un évaporateur (25) agencé sur le circuit fluidique intermédiaire (32) en aval de du deuxième échangeur intermédiaire (7) et configuré pour transférer l'énergie thermique du fluide intermédiaire au fluide caloporteur,
∘ un compresseur (26) configuré pour comprimer le fluide caloporteur,
∘ un condenseur (23) agencé sur la première ligne d'alimentation (2) en vapeur d'eau en amont du premier module d'échange thermique (5) et configuré pour transférer l'énergie thermique du fluide caloporteur à l'eau liquide,
∘ un détendeur (24) configuré pour détendre le fluide caloporteur,
∘ le circuit fluidique (27) étant configuré pour connecter fluidiquement l'évaporateur (25) au compresseur (26), le compresseur (26) au condenseur (23), le condenseur (23) au détendeur (24) et le détendeur (24) à l'évaporateur (25),
- un cinquième échangeur intermédiaire (12) agencé sur la première ligne d'évacuation (4) du dihydrogène en aval du deuxième échangeur intermédiaire (7) et en parallèle du deuxième échangeur intermédiaire (7) sur le troisième circuit fluidique intermédiaire (32) configuré pour transférer l'énergie thermique du dihydrogène au fluide intermédiaire.

2. Système selon la revendication précédente comprenant un sixième échangeur intermédiaire (15) agencé sur la première ligne d'évacuation (4) du dihydrogène en aval du cinquième échangeur intermédiaire (12) et en parallèle du deuxième échangeur intermédiaire (7) et du cinquième échangeur thermique (12) sur le circuit fluidique intermédiaire (32) configuré pour transférer l'énergie thermique du dihydrogène au fluide intermédiaire.

3. Système selon l'une quelconque des revendications précédentes comprenant un générateur électrique de vapeur (28) agencé sur la première ligne d'alimentation en eau (2) en amont du premier module d'échange thermique (5).

4. Système selon la revendication précédente dans lequel le générateur électrique de vapeur (28) est agencé en aval du premier générateur de vapeur (50).

5. Système selon l'une quelconque des revendications 1 à 3 comprenant un deuxième module de récupération en dépression de l'énergie thermique du dihydrogène en sortie du premier module d'échange thermique (5) au profit de la première ligne d'alimentation (2) en vapeur d'eau, le module de récupération en dépression comprenant :
o un troisième échangeur intermédiaire (8) agencé sur la première ligne d'évacuation (4) en aval du premier module d'échange thermique (5) et configuré pour transférer l'énergie thermique du dihydrogène à un fluide intermédiaire,
o un détendeur (40) et un compresseur (41) agencés en amont du premier module d'échange thermique (5) sur la première ligne d'alimentation (2) en vapeur et définissant entre eux un tronçon en dépression de la première ligne d'alimentation (2) en vapeur,
o un deuxième générateur de vapeur intermédiaire (60) agencé sur la portion en dépression de la première ligne d'alimentation (2) en vapeur configuré pour transférer l'énergie thermique du fluide intermédiaire à l'eau liquide,
o un deuxième circuit fluidique intermédiaire () configuré pour recevoir un fluide intermédiaire et assurer la connexion fluidique entre le troisième échangeur intermédiaire (8) et le deuxième générateur de vapeur (60).

6. Système selon la revendication précédente dans lequel le générateur de vapeur électrique (28) est agencé sur la portion en dépression en aval du deuxième générateur de vapeur (60).

7. Système selon l'une quelconque des deux revendications précédentes dans lequel la première ligne d'alimentation (2) en vapeur comprend une branche principale sur laquelle est agencé le générateur de vapeur (50) et une branche en dépression comprenant le tronçon en dépression, la branche principale et le branche en dépression étant agencée en parallèle.

8. Système selon l'une quelconque des revendications précédentes comprenant une deuxième ligne d'alimentation (10) de l'électrolyseur configuré pour alimenter l'électrolyseur (1) en air.

9. Système selon la revendication précédente comprenant un deuxième module d'échange thermique (11) configuré pour assurer un échange thermique entre la deuxième ligne d'alimentation (10) en air et la deuxième ligne d'évacuation (3) du dioxygène.

10. Système selon l'une quelconque des revendications précédentes comprenant un quatrième échangeur thermique intermédiaire (9) agencé entre la deuxième ligne d'évacuation du dioxygène (10) et sur le premier circuit fluidique intermédiaire (), en parallèle au premier échangeur intermédiaire (6).

11. Système selon la revendication précédente comprenant un septième échangeur intermédiaire (29) agencé sur la deuxième ligne d'évacuation du dioxygène (10) en aval du premier échangeur thermique (9) et en parallèle du deuxième échangeur intermédiaire (7) sur le troisième circuit fluidique intermédiaire (32) configuré pour transférer l'énergie thermique du dioxygène au fluide intermédiaire.

## Patentansprüche

1. System, umfassend
- einen Hochtemperatur-Elektrolyseur (1) (EHT),
- eine erste Versorgungsleitung (2) des Elektrolyseurs, die dazu konfiguriert ist, den Elektrolyseur (1) mit Wasserdampf zu versorgen,
- eine erste Ableitungsleitung (4) des Elektrolyseurs, die dazu konfiguriert ist, aus dem Elektrolyseur (1) Dihydrogen abzuleiten,
- eine zweite Ableitungsleitung (3) des Elektrolyseurs, die dazu konfiguriert ist, Disauerstoff aus dem den Elektrolyseur (1) abzuleiten,
- ein erstes Wärmeaustauschmodul (5), das dazu konfiguriert ist, einen Wärmeaustausch zwischen der ersten Wasserdampfversorgungsleitung (2) und der ersten Ableitungsleitung (4) des Dihydrogens sicherzustellen,
**dadurch gekennzeichnet, dass** das System Folgendes umfasst
- ein erstes Rückgewinnungsmodul der Wärmeenergie des Dihydrogens am Ausgang des ersten Wärmeaustauschmoduls (5) zugunsten der ersten Wasserdampfversorgungsleitung (2), wobei das Rückgewinnungsmodul Folgendes umfasst
o einen ersten Zwischenwärmetauscher (6), der auf der ersten Ableitungsleitung (4) stromabwärts des ersten Wärmeaustauschmoduls (5) eingerichtet und dazu konfiguriert ist, die Wärmeenergie des Dihydrogens an ein Zwischenfluid zu übertragen, und
o einen ersten Zwischendampfgenerator 50), der auf der ersten Dampfversorgungsleitung (2) eingerichtet ist, der dazu konfiguriert ist, die Wärmeenergie des Zwischenfluids an das flüssige Wasser zu übertragen,
o einen ersten Zwischenfluidkreislauf, der dazu konfiguriert ist, ein Zwischenfluid aufzunehmen und die Fluidverbindung zwischen dem ersten Zwischenwärmetauscher (6) und dem ersten Zwischendampfgenerator (50) sicherzustellen,
- ein drittes Rückgewinnungsmodul der Wärmeenergie des Dihydrogens am Ausgang des ersten Wärmeaustauschmoduls (5) zugunsten der ersten Wasserdampfversorgungsleitung (2), wobei das dritte Rückgewinnungsmodul eine Wärmepumpe und einen Zwischenkreislauf umfasst, wobei der Zwischenkreislauf Folgendes umfasst:
o einen zweiten Zwischenwärmetauscher (7), der auf der ersten Ableitungsleitung (2) stromabwärts des ersten Wärmeaustauschmoduls (5) eingerichtet und dazu konfiguriert ist, die Wärmeenergie des Dihydrogens an ein Zwischenfluid zu übertragen, und
o einen dritten Zwischenfluidkreislauf (32), der dazu konfiguriert ist, ein Zwischenfluid aufzunehmen und die Fluidverbindung zwischen dem zweiten Zwischenwärmetauscher (7) und der Wärmepumpe sicherzustellen, wobei die Wärmepumpe Folgendes umfasst:
o einen Fluidkreislauf (27), der dazu konfiguriert ist, ein Kühlmittel aufzunehmen,
o einen Verdampfer (25), der auf dem Zwischenfluidkreislauf (32) stromabwärts des zweiten Zwischenwärmetauscher (7) eingerichtet und dazu konfiguriert ist, die Wärmeenergie des Zwischenfluids an das Kühlmittel zu übertragen,
o einen Kompressor (26), der dazu konfiguriert ist, das Kühlmittel zu komprimieren,
o einen Kondensator (23), der auf der ersten Wasserdampfversorgungsleitung (2) stromaufwärts des ersten Wärmeaustauschmoduls (5) eingerichtet und dazu konfiguriert ist, die Wärmeenergie des Kühlmittels an das flüssige Wasser zu übertragen,
o ein Druckminderventil (24), das dazu konfiguriert ist, das Kühlmittel zu entspannen,
o wobei der Fluidkreislauf (27) dazu konfiguriert ist, den Verdampfer (25) fluidisch mit dem Kompressor (26), den Kompressor (26) mit dem Kondensator (23), den Kondensator (23) mit dem Druckminderventil (24) und das Druckminderventil (24) mit dem Verdampfer (25) zu verbinden,
- einen fünften Zwischenwärmetauscher (12), der auf der ersten Ableitungsleitung (4) des Dihydrogens stromabwärts des zweiten Zwischenwärmetauschers (7) und parallel zu dem zweiten Zwischenwärmetauscher (7) auf dem dritten Zwischenfluidkreislauf (32) eingerichtet ist, der dazu konfiguriert ist, die Wärmeenergie des Dihydrogens an das Zwischenfluid zu übertragen.

2. System nach dem vorstehenden Anspruch, das einen sechsten Zwischenwärmetauscher (15), der auf der ersten Ableitungsleitung (4) des Dihydrogens stromabwärts des fünften Zwischenwärmetauschers (12) und parallel zu dem zweiten Zwischenwärmetauscher (7) und dem fünften Wärmetauscher (12) auf dem Zwischenfluidkreislauf (32) eingerichtet ist, der dazu konfiguriert ist, die Wärmeenergie des Dihydrogens an das Zwischenfluid zu übertragen.

3. System nach einem der vorstehenden Ansprüche, das einen elektrischen Dampfgenerator (28) umfasst, der auf der ersten Wasserableitungsleitung (2) stromaufwärts des ersten Wärmeaustauschmoduls (5) eingerichtet ist.

4. System nach dem vorstehenden Anspruch, wobei der elektrische Dampfgenerator (28) stromabwärts des ersten Dampfgenerators (50) eingerichtet ist.

5. System nach einem der Ansprüche 1 bis 3, das ein zweites Vakuum-Rückgewinnungsmodul der Wärmeenergie des Dihydrogens am Ausgang des ersten Wärmeaustauschmoduls (5) zugunsten der ersten Wasserdampfversorgungsleitung (2) umfasst, wobei das Vakuum-Rückgewinnungsmodul Folgendes umfasst:
o einen dritten Zwischenwärmetauscher (8), der auf der ersten Ableitungsleitung (4) stromabwärts des ersten Wärmeaustauschmoduls (5) eingerichtet und dazu konfiguriert ist, die Wärmeenergie des Dihydrogens an ein Zwischenfluid zu übertragen,
o ein Druckminderventil (40) und einen Kompressor (41), die stromaufwärts des ersten Wärmeaustauschmoduls (5) auf der ersten Dampfversorgungsleitung (2) eingerichtet sind und zwischen einander einen Vakuumabschnitt der ersten Dampfversorgungsleitung (2) definieren,
o einen zweiten Zwischendampfgenerator 60), der auf dem Vakuumabschnitt der ersten Dampfversorgungsleitung (2) eingerichtet ist, der dazu konfiguriert ist, die Wärmeenergie des Zwischenfluids an das flüssige Wasser zu übertragen,
o einen zweiten Zwischenfluidkreislauf (), der dazu konfiguriert ist, ein Zwischenfluid aufzunehmen und die Fluidverbindung zwischen dem dritten Zwischenwärmetauscher (8) und dem zweiten Dampfgenerator (60) sicherzustellen,

6. System nach dem vorstehenden Anspruch, wobei der elektrische Dampfgenerator (28) auf dem Vakuumabschnitt stromabwärts des zweiten Dampfgenerators (60) eingerichtet ist.

7. System nach einem der beiden vorstehenden Ansprüche, wobei die erste Dampfversorgungsleitung (2) einen Hauptzweig umfasst, auf dem der Dampfgenerator (50) eingerichtet ist, und einen Vakuumzweig, der den Vakuumabschnitt umfasst, wobei der Hauptzweig und der Vakuumzweig parallel eingerichtet sind.

8. System nach einem der vorstehenden Ansprüche, das eine zweite Versorgungsleitung (10) des Elektrolyseurs umfasst, die dazu konfiguriert ist, den Elektrolyseur (1) mit Luft zu versorgen.

9. System nach einem der vorstehenden Ansprüche, das ein zweites Wärmeaustauschmodul (11) umfasst, das dazu konfiguriert ist, einen Wärmeaustausch zwischen der zweiten Luftversorgungsleitung (10) und der zweiten Ableitungsleitung (3) des Disauerstoffs sicherzustellen.

10. System nach einem der vorstehenden Ansprüche, das einen vierten Zwischenwärmetauscher (9) umfasst, der zwischen der zweiten Ableitungsleitung (10) des Disauerstoffs und auf dem ersten Zwischenfluidkreislauf (), parallel zu dem ersten Zwischenwärmetauscher (6) eingerichtet ist.

11. System nach dem vorstehenden Anspruch, das einen siebten Zwischenwärmetauscher (29), der auf der zweiten Ableitungsleitung des Dihydrogens (10) stromabwärts des ersten Wärmetauschers (9) und parallel zu dem zweiten Zwischenwärmetauscher (7) auf dem dritten Zwischenfluidkreislauf (32) eingerichtet ist, der dazu konfiguriert ist, die Wärmeenergie des Disauerstoffs an das Zwischenfluid zu übertragen.

## Claims

1. System comprising
- a high temperature electrolyser (HTE) (1),
- a first supply line (2) of the electrolyser configured to supply the electrolyser (1) with steam,
- a first discharge line (4) of the electrolyser configured to discharge dihydrogen from the electrolyser (1),
- a second discharge line (3) of the electrolyser configured to discharge dioxygen from the electrolyser (1),
- a first heat exchange module (5) configured to ensure a heat exchange between the first steam supply line (2) and the first dihydrogen discharge line (4),
**characterised in that** the system comprises
- a first module for recovering the thermal energy from the dihydrogen at the outlet of the first heat exchange module (5) in favour of the first steam supply line (2), the recovery module comprising
o a first intermediate exchanger (6) arranged on the first supply line (4) downstream from the first heat exchange module (5) and configured to transfer the thermal energy from the dihydrogen to an intermediate fluid, and
o a first intermediate steam generator (50) arranged on the first steam supply line (2) configured to transfer the thermal energy from the intermediate fluid to the liquid water,
o a first intermediate fluid circuit configured to receive an intermediate fluid and ensure the fluid connection between the first intermediate exchanger (6) and the first intermediate steam generator (50),
- a third module for recovering the thermal energy from the dihydrogen at the outlet of the first heat exchange module (5) in favour of the first steam supply line (2), the third recovery module comprising a heat pump and an intermediate circuit, the intermediate circuit comprising:
o a second intermediate exchanger (7) arranged on the first discharge line (2) downstream from the first heat exchange module (5) and configured to transfer the thermal energy from the dihydrogen to an intermediate fluid, and
∘ a third intermediate fluid circuit (32) configured to receive an intermediate fluid and ensure the fluid connection between the second intermediate exchanger (7) and the heat pump, the heat pump comprising:
o a fluid circuit (27) configured to receive a heat-transfer fluid,
o an evaporator (25) arranged on the intermediate fluid circuit (32) downstream from the second intermediate exchanger (7) and configured to transfer the thermal energy from the intermediate fluid to the heat-transfer fluid,
o a compressor (26) configured to compress the heat-transfer fluid,
o a condenser (23) arranged on the first steam supply line (2) upstream from the first heat exchange module (5) and configured to transfer the thermal energy from the heat-transfer fluid to the liquid water,
o an expander(24) configured to expand the heat-transfer fluid,
o the fluid circuit (27) being configured to fluidically connect the evaporator (25) to the compressor (26), the compressor (26) to the condenser (23), the condenser (23) to the expander (24) and the expander (24) to the evaporator (25),
- a fifth intermediate exchanger (12) arranged on the first dihydrogen discharge line (4) downstream from the second intermediate exchanger (7) and in parallel from the second intermediate exchanger (7) on the third intermediate fluid circuit (32) configured to transfer the thermal energy from the dihydrogen to the intermediate fluid.

2. System according to the preceding claim, comprising a sixth intermediate exchanger (15) arranged on the first dihydrogen discharge line (4) downstream from the fifth intermediate exchanger (12) and in parallel from the second intermediate exchanger (7) and from the fifth heat exchanger (12) on the intermediate fluid circuit (32) configured to transfer the thermal energy from the dihydrogen to the intermediate fluid.

3. System according to any one of the preceding claims, comprising an electric steam generator (28) arranged on the first steam supply line (2) upstream from the first heat exchange module (5).

4. System according to the preceding claim, wherein the electric steam generator (28) is arranged downstream from the first steam generator (50).

5. System according to any one of claims 1 to 3, comprising a second depressed module for the recovery of the thermal energy from the dihydrogen at the outlet of the first heat exchange module (5) in favour of the first steam supply line (2), the depressed recovery module comprising:
o a third intermediate exchanger (8) arranged on the first discharge line (4) downstream from the first heat exchange module (5) and configured to transfer the thermal energy from the dihydrogen to an intermediate fluid,
o an expander (40) and a compressor (41) arranged upstream from the first heat exchange module (5) on the first steam supply line (2) and defining between them a depressed section of the first steam supply line (2),
o a second intermediate steam generator (60) arranged on the depressed portion of the first steam supply line (2) configured to transfer the thermal energy from the intermediate fluid to the liquid water,
o a second intermediate fluid circuit configured to receive an intermediate fluid and ensure the fluid connection between the third intermediate exchanger (8) and the second steam generator (60).

6. System according to the preceding claim, wherein the electric steam generator (28) is arranged on the depressed portion downstream from the second steam generator (60).

7. System according to any one of the two preceding claims, wherein the first steam supply line (2) comprises a main branch on which the steam generator (50) is arranged, and a depressed branch comprising the depressed section, the main branch and the depressed branch being arranged in parallel.

8. System according to any one of the preceding claims, comprising a second supply line (10) of the electrolyser configured to supply the electrolyser (1) with air.

9. System according to the preceding claim, comprising a second heat exchange module (11) configured to ensure a heat exchange between the second air supply line (10) and the second dioxygen discharge line (3).

10. System according to any one of the preceding claims, comprising a fourth intermediate heat exchanger (9) arranged between the second dioxygen discharge line (10) and on the first intermediate fluid circuit, in parallel to the first intermediate exchanger (6).

11. System according to the preceding claim, comprising a seventh intermediate exchanger (29) arranged on the second dioxygen discharge line (10) downstream from the first heat exchanger (9) and in parallel from the second intermediate exchanger (7) on the third intermediate fluid circuit (32) configured to transfer the thermal energy from the dioxygen to the intermediate fluid.
